# EUROPEAN PATENT APPLICATION

(11) **EP 4 478 329 A1**
(43) Date of publication of application: **18.12.2024**
(21) Application number: 24182178.4
(22) Date of filing: 14.06.2024
(51) Int. Cl.: G08G 1/0962, B60W 30/18, B60W 40/04, B60W 50/00, G06V 20/58, G08G 1/0967

(54) **METHOD TO HANDLE INTERSECTIONS WITH HEAVY TRAFFIC IN AUTONOMOUS VEHICLES**

(30) Priority: 15.06.2023 US 202318335322
(71) Applicant: Volvo Car Corporation, 405 31 Göteborg (SE)
(72) Inventor: PEREZ BARRERA, Oswaldo, 40531 Göteborg (SE)
(74) Representative: Maiwald GmbH

(57) **Abstract**

In an aspect, a method is described. The method comprises: determining, by a control module, a traffic condition surrounding a vehicle in real-time (202); detecting, by the control module, movement of the vehicle towards a traffic light and an intersection area (204); determining, by the control module, a time taken for a traffic light cycle (206); determining, by the control module, an average distance travelled by the vehicle during the traffic light cycle (208); and computing, by the control module, a probability of the vehicle crossing the intersection area prior to a red signal of the traffic light cycle, based on the average distance travelled by the vehicle, intersection area information, and a length of the vehicle (210). The vehicle may be an autonomous vehicle (self-driven vehicle), a semi- autonomous vehicle, or a manual driven vehicle.

## Description

### FIELD OF THE INVENTION

The present disclosure relates generally to a field of transportation. More specifically, the present disclosure relates to systems and methods of improving mobility and safety between vehicles at intersection areas.

### BACKGROUND

"Traffic congestion problems are the most pressing problems in many urban areas of Surat city. These problems are main bottlenecks in the free movement of the vehicles on the roads as well as the intersection. The traffic delay problems are mainly due to increase in population and also due to unproductive use of road section. Road intersections are a major part of the road section which plays an important role in channelizing traffic movements. The various traffic congestion problems associated with the road networks are traffic delay, environmental problems, more cost due to more fuel consumption, traffic safety problems and many more. Thus, traffic congestion is the result of the gap between traffic supply and traffic demand. Urban road intersections are the major bottleneck and are the major strike of traffic delays. This is because at the road intersection vehicle approaches for different maneuvering movements such as left turn, right turn, U-turn movements which seeks the same space at the same time by vehicles and the pedestrians. Thus, urban road intersections are the major critical points of safety capacity and delay and efficiency point of view." [Source: "A CRITICAL STUDY OF ROAD INTERSECTIONS IN THE SOUTH EAST PART OF SURAT CITY", published on April 2018]

Therefore, there is a long-felt need for a system and method that can monitor the traffic condition and provide driving assistance to the vehicles as well as the nearby vehicles to improve traffic condition at the intersection area.

### SUMMARY

The following presents a summary to provide a basic understanding of one or more embodiments described herein. This summary is not intended to identify key or critical elements or delineate any scope of the different embodiments and/or any scope of the claims. The sole purpose of the summary is to present some concepts in a simplified form as a prelude to the more detailed description presented herein.

In one or more embodiments described herein, systems, devices, computer-implemented methods, methods, apparatus and/or computer program products are presented that facilitate to handle intersections with heavy traffic in autonomous vehicles.

In an aspect, a method is described. The method comprises: determining, by a control module, a traffic condition surrounding a vehicle in real-time; detecting, by the control module, movement of the vehicle towards a traffic light and an intersection area; determining, by the control module, a time taken for a traffic light cycle; determining, by the control module, an average distance travelled by the vehicle during the traffic light cycle; and computing, by the control module through a computing engine, a probability of the vehicle crossing the intersection area prior to a red signal of the traffic light cycle, based on the average distance travelled by the vehicle, intersection area information, and a length of the vehicle. The probability of the vehicle crossing the intersection area is set to true when computed that the vehicle crosses the intersection area prior to the red signal of the traffic light cycle. The probability of the vehicle crossing the intersection area is set to false when computed that the vehicle obstructs the intersection area.

In another aspect, a system is described. The system comprises a communication module, and a control module. The control module is operable to determine a traffic condition surrounding a vehicle in real-time; detect movement of the vehicle towards a traffic light and an intersection area; determine a time taken for a traffic light cycle; determine an average distance travelled by the vehicle during the traffic light cycle; and compute, through a computing engine, a probability of the vehicle crossing the intersection area prior to a red signal of the traffic light cycle, based on the average distance travelled by the vehicle, intersection area information, and a length of the vehicle. The probability of the vehicle crossing the intersection area is set to true when computed that the vehicle crosses the intersection area prior to the red signal of the traffic light cycle. The probability of the vehicle crossing the intersection area is set to false when computed that the vehicle obstructs the intersection area.

In yet another aspect, a non-transitory computer readable medium. The non-transitory computer readable medium storing a sequence of instructions, which when executed by a processor causes: determining a traffic condition surrounding a vehicle in real-time; detecting movement of the vehicle towards a traffic light and an intersection area; determining a time taken for a traffic light cycle; determining an average distance travelled by the vehicle during the traffic light cycle; and compute, through a computing engine, a probability of the vehicle crossing the intersection area prior to a red signal of the traffic light cycle, based on the average distance travelled by the vehicle, intersection area information, and a length of the vehicle. The probability of the vehicle crossing the intersection area is set to true when computed that the vehicle crosses the intersection area prior to the red signal of the traffic light cycle. The probability of the vehicle crossing the intersection area is set to false when computed that the vehicle obstructs the intersection area.

The methods and systems disclosed herein may be implemented in any means for achieving various aspects and may be executed in a form of a non-transitory machine-readable medium embodying a set of instructions that, when executed by a machine, causes the machine to perform any of the operations disclosed herein. Other features will be apparent from the accompanying drawings and from the detailed description that follows.

### BRIEF DESCRIPTION OF THE FIGURES

These and other aspects of the present disclosure will now be described in more detail, with reference to the appended drawings showing exemplary embodiments, in which:
**FIG. 1A - 1B** illustrates a traffic condition at an intersection area.
**FIG. 2** illustrates the method of handling an intersection area with heavy traffic, according to one or more embodiments.
**FIG. 3** illustrates a detection of traffic conditions according to one or more embodiments.
**FIG. 4** illustrates a determination of time taken for a traffic light cycle, according to one or more embodiments.
**FIG. 5** illustrates a determination of average distance travelled by the vehicle during the traffic light cycle, according to one or more embodiments.
**FIG. 6A - 6D** illustrates a determination of probability of the vehicle crossing the intersection area prior to a red signal of the traffic light cycle, according to one or more embodiments.
**FIG. 7** illustrates a communication between the vehicle 702 and the trailing vehicle, according to one or more embodiments.
**FIG. 8A - 8B** illustrates a determination of the vehicle passing the intersection area, according to one or more embodiments.
**FIG. 9A - 9B** illustrate a lane detection, according to one or more embodiments.
**FIG. 10** illustrates a determination of probability of the trailing vehicle behind the vehicle crossing the intersection area, according to one or more embodiments.
**FIG. 11A - 11C** illustrate a communication between the vehicle and the nearby vehicles to upgrade traffic conditions, according to one or more embodiments.
**FIG. 12** illustrates a system according to one or more embodiments.
**FIG. 13** illustrates a non-transitory computer readable medium, according to one or more embodiments.
**FIG. 14** shows a block diagram of electronic components of a vehicle according to an embodiment.
**FIG. 15** shows example messages in Dedicated Short-Range Communications (DSRC) message format according to an embodiment.
**FIG. 16A** shows a structure of the neural network / machine learning model with a feedback loop.
**FIG. 16B** shows a structure of the neural network/machine learning model with reinforcement learning.
**FIG. 17A** shows a block diagram of the cyber security module in view of the system and server.
**FIG. 17B** shows an embodiment of the cyber security module.
**FIG. 17C** shows another embodiment of the cyber security module.

Other features of the present embodiments will be apparent from the accompanying drawings and from the detailed description that follows.

### DETAILED DESCRIPTION

For simplicity and clarity of illustration, the figures illustrate the general manner of construction. The description and figures may omit the descriptions and details of well-known features and techniques to avoid unnecessarily obscuring the present disclosure. The figures exaggerate the dimensions of some of the elements relative to other elements to help improve understanding of embodiments of the present disclosure. The same reference numeral in different figures denotes the same element.

Although the detailed description herein contains many specifics for the purpose of illustration, a person of ordinary skill in the art will appreciate that many variations and alterations to the details are considered to be included herein.

Accordingly, the embodiments herein are without any loss of generality to, and without imposing limitations upon, any claims set forth. The terminology used herein is for the purpose of describing particular embodiments only and is not limiting. Unless defined otherwise, all technical and scientific terms used herein have the same meaning as commonly understood by one with ordinary skill in the art to which this disclosure belongs.

Unless defined otherwise, all technical and scientific terms used herein have the same meaning as commonly understood by one with ordinary skill in the art to which this disclosure belongs.

As used herein, the articles "a" and "an" used herein refer to one or to more than one (i.e., to at least one) of the grammatical object of the article. By way of example, "an element" means one element or more than one element. Moreover, usage of articles "a" and "an" in the subject specification and annexed drawings construe to mean "one or more" unless specified otherwise or clear from context to mean a singular form.

As used herein, the terms "example" and/or "exemplary" mean serving as an example, instance, or illustration. For the avoidance of doubt, such examples do not limit the herein described subject matter. In addition, any aspect or design described herein as an "example" and/or "exemplary" is not necessarily preferred or advantageous over other aspects or designs, nor does it preclude equivalent exemplary structures and techniques known to those of ordinary skill in the art.

As used herein, the terms "first, " "second, " "third, " and the like in the description and in the claims, if any, distinguish between similar elements and do not necessarily describe a particular sequence or chronological order. The terms are interchangeable under appropriate circumstances such that the embodiments herein are, for example, capable of operation in sequences other than those illustrated or otherwise described herein. Furthermore, the terms "include, " "have, " and any variations thereof, cover a non-exclusive inclusion such that a process, method, system, article, device, or apparatus that comprises a list of elements is not necessarily limiting to those elements, but may include other elements not expressly listed or inherent to such process, method, system, article, device, or apparatus.

As used herein, the terms "left, " "right, " "front, " "back, " "top, " "bottom, " "over, " "under" and the like in the description and in the claims, if any, are for descriptive purposes and not necessarily for describing permanent relative positions. The terms so used are interchangeable under appropriate circumstances such that the embodiments of the apparatus, methods, and/or articles of manufacture described herein are, for example, capable of operation in other orientations than those illustrated or otherwise described herein.

No element act, or instruction used herein is critical or essential unless explicitly described as such. Furthermore, the term "set" includes items (e.g., related items, unrelated items, a combination of related items and unrelated items, etc.) and may be interchangeable with "one or more". Where only one item is intended, the term "one" or similar language is used. Also, the terms "has, " "have, " "having, " or the like are open-ended terms. Further, the phrase "based on" means "based, at least in part, on" unless explicitly stated otherwise.

As used herein, the terms "system, " "device, " "unit, " and/or "module" refer to a different component, component portion, or component of the various levels of the order. However, other expressions that achieve the same purpose may replace the terms.

As used herein, the terms "couple, " "coupled, " "couples, " "coupling, " and the like refer to connecting two or more elements mechanically, electrically, and/or otherwise. Two or more electrical elements may be electrically coupled together, but not mechanically or otherwise coupled together. Coupling may be for any length of time, e.g., permanent, or semi-permanent or only for an instant. "Electrical coupling" includes electrical coupling of all types. The absence of the word "removably, " "removable, " and the like, near the word "coupled" and the like does not mean that the coupling, etc. in question is or is not removable.

As used herein, the term "or" means an inclusive "or" rather than an exclusive "or." That is, unless specified otherwise, or clear from context, "X employs A or B" means any of the natural inclusive permutations. That is, if X employs A; X employs B; or X employs both A and B, then "X employs A or B" is satisfied under any of the foregoing instances.

As used herein, two or more elements or modules are "integral" or "integrated" if they operate functionally together. Two or more elements are "non-integral" if each element can operate functionally independently.

As used herein, the term "real-time" refers to operations conducted as soon as practically possible upon occurrence of a triggering event. A triggering event can include receipt of data necessary to execute a task or to otherwise process information. Because of delays inherent in transmission and/or in computing speeds, the term "real-time" encompasses operations that occur in "near" real-time or somewhat delayed from a triggering event. In a number of embodiments, "real-time" can mean real-time less a time delay for processing (e.g., determining) and/or transmitting data. The particular time delay can vary depending on the type and/or amount of the data, the processing speeds of the hardware, the transmission capability of the communication hardware, the transmission distance, etc. However, in many embodiments, the time delay can be less than approximately one second, two seconds, five seconds, or ten seconds.

As used herein, the term "approximately" can mean within a specified or unspecified range of the specified or unspecified stated value. In some embodiments, "approximately" can mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.

Digital electronic circuitry, or in computer software, firmware, or hardware, including the structures disclosed in this specification and their structural equivalents, or in combinations of one or more of them may realize the implementations and all of the functional operations described in this specification. Implementations may be as one or more computer program products i.e., one or more modules of computer program instructions encoded on a computer-readable medium for execution by, or to control the operation of, data processing apparatus. The computer-readable medium may be a machine-readable storage device, a machine-readable storage substrate, a memory device, a composition of matter affecting a machine-readable propagated signal, or a combination of one or more of them. The term "computing system" encompasses all apparatus, devices, and machines for processing data, including by way of example, a programmable processor, a computer, or multiple processors or computers. The apparatus may include, in addition to hardware, code that creates an execution environment for the computer program in question, e.g., code that constitutes processor firmware, a protocol stack, a database management system, an operating system, or a combination of one or more of them. A propagated signal is an artificially generated signal (e.g., a machine-generated electrical, optical, or electromagnetic signal) that encodes information for transmission to a suitable receiver apparatus.

The actual specialized control hardware or software code used to implement these systems and/or methods is not limiting to the implementations. Thus, any software and any hardware can implement the systems and/or methods based on the description herein without reference to specific software code.

A computer program (also known as a program, software, software application, script, or code) is written in any appropriate form of programming language, including compiled or interpreted languages. Any appropriate form, including a standalone program or a module, component, subroutine, or other unit suitable for use in a computing environment may deploy it. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may execute on one computer or on multiple computers that are located at one site or distributed across multiple sites and interconnected by a communication network.

One or more programmable processors, executing one or more computer programs to perform functions by operating on input data and generating output, perform the processes and logic flows described in this specification. The processes and logic flows may also be performed by, and apparatus may also be implemented as, special purpose logic circuitry, for example, without limitation, a Field Programmable Gate Array (FPGA), an Application Specific Integrated Circuit (ASIC), Application Specific Standard Products (ASSPs), System-On-a-Chip (SOC) systems, Complex Programmable Logic Devices (CPLDs), etc.

Processors suitable for the execution of a computer program include, by way of example, both general and special purpose microprocessors, and any one or more processors of any appropriate kind of a digital computer. A processor will receive instructions and data from a read-only memory or a random-access memory or both. Elements of a computer can include a processor for performing instructions and one or more memory devices for storing instructions and data. A computer will also include, or is operatively coupled to receive data, transfer data or both, to/from one or more mass storage devices for storing data e.g., magnetic disks, magneto optical disks, optical disks, or solid-state disks. However, a computer need not have such devices. Moreover, another device, e.g., a mobile telephone, a personal digital assistant (PDA), a mobile audio player, a Global Positioning System (GPS) receiver, etc. may embed a computer. Computer-readable media suitable for storing computer program instructions and data include all forms of non-volatile memory, media and memory devices, including, by way of example, semiconductor memory devices (e.g., Erasable Programmable Read-Only Memory (EPROM), Electronically Erasable Programmable Read-Only Memory (EEPROM), and flash memory devices), magnetic disks (e.g., internal hard disks or removable disks), magneto optical disks (e.g. Compact Disc Read-Only Memory (CD ROM) disks, Digital Versatile Disk-Read-Only Memory (DVD-ROM) disks) and solid-state disks. Special purpose logic circuitry may supplement or incorporate the processor and the memory.

To provide for interaction with a user, a computer may have a display device, e.g., a Cathode Ray Tube (CRT) or Liquid Crystal Display (LCD) monitor, for displaying information to the user, and a keyboard and a pointing device, e.g., a mouse or a trackball, by which the user may provide input to the computer. Other kinds of devices provide for interaction with a user as well. For example, feedback to the user may be any appropriate form of sensory feedback, e.g., visual feedback, auditory feedback, or tactile feedback; and a computer may receive input from the user in any appropriate form, including acoustic, speech, or tactile input.

A computing system that includes a back-end component, e.g., a data server, or that includes a middleware component, e.g., an application server, or that includes a front-end component, e.g., a client computer having a graphical user interface or a Web browser through which a user may interact with an implementation, or any appropriate combination of one or more such back-end, middleware, or front-end components, may realize implementations described herein. Any appropriate form or medium of digital data communication, e.g., a communication network may interconnect the components of the system. Examples of communication networks include a Local Area Network (LAN) and a Wide Area Network (WAN), e.g., Intranet and Internet.

The computing system may include clients and servers. A client and server are remote from each other and typically interact through a communication network. The relationship of the client and server arises by virtue of computer programs running on the respective computers and having a client-server relationship to each other.

Embodiments may comprise or utilize a special purpose or general purpose computer including computer hardware. Embodiments within the scope of the present invention may also include physical and other computer-readable media for carrying or storing computer-executable instructions and/or data structures. Such computer-readable media can be any media accessible by a general purpose or special purpose computer system. Computer-readable media that store computer-executable instructions are physical storage media. Computer-readable media that carry computer-executable instructions are transmission media. Thus, by way of example and not limitation, embodiments of the invention can comprise at least two distinct kinds of computer-readable media: physical computer-readable storage media and transmission computer-readable media.

Although the present embodiments described herein are with reference to specific example embodiments it will be evident that various modifications and changes may be made to these embodiments without departing from the broader spirit and scope of the various embodiments. For example, hardware circuitry (e.g., Complementary Metal Oxide Semiconductor (CMOS) based logic circuitry), firmware, software (e.g., embodied in a non-transitory machine-readable medium), or any combination of hardware, firmware, and software may enable and operate the various devices, units, and modules described herein. For example, transistors, logic gates, and electrical circuits (e.g., Application Specific Integrated Circuit (ASIC) and/or Digital Signal Processor (DSP) circuit) may embody the various electrical structures and methods.

In addition, a non-transitory machine-readable medium and/or a system may embody the various operations, processes, and methods disclosed herein. Accordingly, the specification and drawings are illustrative rather than restrictive.

Physical computer-readable storage media includes RAM, ROM, EEPROM, CD-ROM or other optical disk storage (such as CDs, DVDs, etc.), magnetic disk storage or other magnetic storage devices, solid-state disks or any other medium. They store desired program code in the form of computer-executable instructions or data structures which can be accessed by a general purpose or special purpose computer.

As used herein, the term "network" may include the Internet, a local area network, a wide area network, or combinations thereof. The network may include one or more networks or communication systems, such as the Internet, the telephone system, satellite networks, cable television networks, and various other private and public networks. In addition, the connections may include wired connections (such as wires, cables, fiber optic lines, etc.), wireless connections, or combinations thereof. Furthermore, although not shown, other computers, systems, devices, and networks may also be connected to the network. Network refers to any set of devices or subsystems connected by links joining (directly or indirectly) a set of terminal nodes sharing resources located on or provided by network nodes. The computers use common communication protocols over digital interconnections to communicate with each other. For example, subsystems may comprise the cloud. Cloud refers to servers that are accessed over the Internet, and the software and databases that run on those servers.

Further, upon reaching various computer system components, program code in the form of computer-executable instructions or data structures can be transferred automatically from transmission computer-readable media to physical computer-readable storage media (or vice versa). For example, computer-executable instructions or data structures received over a network or data link can be buffered in RAM within a Network Interface Module (NIC), and then eventually transferred to computer system RAM and/or to less volatile computer-readable physical storage media at a computer system. Thus, computer system components that also (or even primarily) utilize transmission media may include computer-readable physical storage media.

Computer-executable instructions comprise, for example, instructions and data which cause a general purpose computer, special purpose computer, or special purpose processing device to perform a certain function or group of functions. The computer-executable instructions may be, for example, binary, intermediate format instructions such as assembly language, or even source code. Although the subject matter herein described is in a language specific to structural features and/or methodological acts, the described features or acts described do not limit the subject matter defined in the claims. Rather, the herein described features and acts are example forms of implementing the claims.

While this specification contains many specifics, these do not construe as limitations on the scope of the disclosure or of the claims, but as descriptions of features specific to particular implementations. A single implementation may implement certain features described in this specification in the context of separate implementations. Conversely, multiple implementations separately or in any suitable sub-combination may implement various features described herein in the context of a single implementation. Moreover, although features described herein as acting in certain combinations and even initially claimed as such, one or more features from a claimed combination may in some cases be excised from the combination, and the claimed combination may be directed to a sub-combination or variation of a sub-combination.

Similarly, while operations depicted herein in the drawings in a particular order to achieve desired results, this should not be understood as requiring that such operations be performed in the particular order shown or in sequential order or that all illustrated operations be performed, to achieve desirable results. In certain circumstances, multitasking and parallel processing may be advantageous. Moreover, the separation of various system components in the implementations should not be understood as requiring such separation in all implementations, and it should be understood that the described program components and systems may be integrated together in a single software product or packaged into multiple software products.

Even though particular combinations of features are recited in the claims and/or disclosed in the specification, these combinations are not intended to limit the disclosure of possible implementations. Other implementations are within the scope of the claims. For example, the actions recited in the claims may be performed in a different order and still achieve desirable results. In fact, many of these features may be combined in ways not specifically recited in the claims and/or disclosed in the specification. Although each dependent claim may directly depend on only one claim, the disclosure of possible implementations includes each dependent claim in combination with every other claim in the claim set.

Further, a computer system including one or more processors and computer-readable media such as computer memory may practice the methods. In particular, one or more processors execute computer-executable instructions, stored in the computer memory, to perform various functions such as the acts recited in the embodiments.

Those skilled in the art will appreciate that the invention may be practiced in network computing environments with many types of computer system configurations including personal computers, desktop computers, laptop computers, message processors, hand-held devices, multiprocessor systems, microprocessor-based or programmable consumer electronics, network PCs, minicomputers, mainframe computers, mobile telephones, PDAs, pagers, routers, switches, etc. Distributed system environments where local and remote computer systems, which are linked (either by hardwired data links, wireless data links, or by a combination of hardwired and wireless data links) through a network, both perform tasks may also practice the invention. In a distributed system environment, program modules may be located in both local and remote memory storage devices.

The following terms and phrases, unless otherwise indicated, shall have the following meanings.

As used herein, the term "Cryptographic protocol" is also known as security protocol or encryption protocol. It is an abstract or concrete protocol that performs a security-related function and applies cryptographic methods often as sequences of cryptographic primitives. A protocol describes usage of the algorithms. A sufficiently detailed protocol includes details about data structures and representations, to implement multiple, interoperable versions of a program. Cryptographic protocols are widely used for secure application-level data transport. A cryptographic protocol usually incorporates at least some of these aspects: key agreement or establishment, entity authentication, symmetric encryption and message authentication, secured application-level data transport, non-repudiation methods, secret sharing methods, and secure multi-party computation. Hashing algorithms may be used to verify the integrity of data. Secure Socket Layer (SSL) and Transport Layer Security (TLS), the successor to SSL, are cryptographic protocols that may be used by networking switches to secure data communications over a network.

Secure application-level data transport widely uses cryptographic protocols. A cryptographic protocol usually incorporates at least some of these aspects: key agreement or establishment, entity authentication, symmetric encryption, and message authentication material construction, secured application-level data transport, non-repudiation methods, secret sharing methods, and secure multi-party computation.

Networking switches use cryptographic protocols, like Secure Socket Layer (SSL) and Transport Layer Security (TLS), the successor to SSL, to secure data communications over a wireless network.

As used herein, the term "Unauthorized access" is when someone gains access to a website, program, server, service, or other system using someone else's account or other methods. For example, if someone kept guessing a password or username for an account that was not theirs until they gained access, it is considered unauthorized access.

As used herein, the term "IoT" stands for Internet of Things which describes the network of physical objects "things" or objects embedded with sensors, software, and other technologies for the purpose of connecting and exchanging data with other devices and systems over the internet.

As used herein "Machine learning " refers to algorithms that give a computer the ability to learn without explicit programming, including algorithms that learn from and make predictions about data. Machine learning techniques include, but are not limited to, support vector machine, artificial neural network (ANN) (also referred to herein as a "neural net"), deep learning neural network, logistic regression, discriminant analysis, random forest, linear regression, rules-based machine learning, Naive Bayes, nearest neighbor, decision tree, decision tree learning, and hidden Markov, etc. For the purposes of clarity, part of a machine learning process can use algorithms such as linear regression or logistic regression. However, using linear regression or another algorithm as part of a machine learning process is distinct from performing a statistical analysis such as regression with a spreadsheet program. The machine learning process can continually learn and adjust the classifier as new data becomes available and does not rely on explicit or rules-based programming. The ANN may be featured with a feedback loop to adjust the system output dynamically as it learns from the new data as it becomes available. In machine learning, backpropagation and feedback loops are used to train the AI/ML model improving the model's accuracy and performance over time.

Statistical modeling relies on finding relationships between variables (e.g., mathematical equations) to predict an outcome.

As used herein, the term "Data mining" is a process used to turn raw data into useful information.

As used herein, the term "Data acquisition" is the process of sampling signals that measure real world physical conditions and converting the resulting samples into digital numeric values that a computer manipulates. Data acquisition systems typically convert analog waveforms into digital values for processing. The components of data acquisition systems include sensors to convert physical parameters to electrical signals, signal conditioning circuitry to convert sensor signals into a form that can be converted to digital values, and analog-to-digital converters to convert conditioned sensor signals to digital values. Stand-alone data acquisition systems are often called data loggers.

As used herein, the term "Dashboard" is a type of interface that visualizes particular Key Performance Indicators (KPIs) for a specific goal or process. It is based on data visualization and infographics.

As used herein, a "Database" is a collection of organized information so that it can be easily accessed, managed, and updated. Computer databases typically contain aggregations of data records or files.

As used herein, the term "Data set" (or "Dataset") is a collection of data. In the case of tabular data, a data set corresponds to one or more database tables, where every column of a table represents a particular variable, and each row corresponds to a given record of the data set in question. The data set lists values for each of the variables, such as height and weight of an object, for each member of the data set. Each value is known as a datum. Data sets can also consist of a collection of documents or files.

As used herein, a "Sensor" is a device that measures physical input from its environment and converts it into data that is interpretable by either a human or a machine. Most sensors are electronic, which presents electronic data, but some are simpler, such as a glass thermometer, which presents visual data.

In an embodiment, sensors may be removably or fixedly installed within the vehicle and may be disposed in various arrangements to provide information to the autonomous operation features. Among the sensors may be included one or more of a GPS unit, a radar unit, a LIDAR unit, an ultrasonic sensor, an infrared sensor, an inductance sensor, a camera, an accelerometer, a tachometer, or a speedometer. Some of the sensors (e.g., radar, LIDAR, or camera units) may actively or passively scan the vehicle environment for obstacles (e.g., other vehicles, buildings, pedestrians, etc.), roadways, lane markings, signs, or signals. Other sensors (e.g., GPS, accelerometer, or tachometer units) may provide data for determining the location or movement of the vehicle (e.g., via GPS coordinates, dead reckoning, wireless signal triangulation, etc.).

The term "vehicle" as used herein refers to a thing used for transporting people or goods. Automobiles, cars, trucks, buses etc. are examples of vehicles.

The term "electronic control unit" (ECU), also known as an "electronic control module" (ECM), is usually a module that controls one or more subsystems. Herein, an ECU may be installed in a car or other motor vehicle. It may refer to many ECUs, and can include but not limited to, Engine Control Module (ECM), Powertrain Control Module (PCM), Transmission Control Module (TCM), Brake Control Module (BCM) or Electronic Brake Control Module (EBCM), Central Control Module (CCM), Central Timing Module (CTM), General Electronic Module (GEM), Body Control Module (BCM), and Suspension Control Module (SCM). ECUs together are sometimes referred to collectively as the vehicles' computer or vehicles' central computer and may include separate computers. In an example, the electronic control unit can be an embedded system in automotive electronics. In another example, the electronic control unit is wirelessly coupled with the automotive electronics.

The terms "non-transitory computer-readable medium" and "computer-readable medium" include a single medium or multiple media such as a centralized or distributed database, and/or associated caches and servers that store one or more sets of instructions. Further, the terms "non-transitory computer-readable medium" and "computer-readable medium" include any tangible medium that is capable of storing, encoding, or carrying a set of instructions for execution by a processor that, for example, when executed, cause a system to perform any one or more of the methods or operations disclosed herein. As used herein, the term "computer readable medium" is expressly defined to include any type of computer readable storage device and/or storage disk and to exclude propagating signals.

The term "Vehicle Data bus" as used herein represents the interface to the vehicle data bus (e.g., CAN, LIN, Ethernet/IP, FlexRay, and MOST) that may enable communication between the Vehicle on-board equipment (OBE) and other vehicle systems to support connected vehicle applications.

The term, "handshaking" refers to an exchange of predetermined signals between agents connected by a communications channel to assure each that it is connected to the other (and not to an imposter). This may also include the use of passwords and codes by an operator. Handshaking signals are transmitted back and forth over a communications network to establish a valid connection between two stations. A hardware handshake uses dedicated wires such as the request-to-send (RTS) and clear-to-send (CTS) lines in an RS-232 serial transmission. A software handshake sends codes such as "synchronize" (SYN) and "acknowledge" (ACK) in a TCP/IP transmission.

The term "infotainment system" or "in-vehicle infotainment system" (IVI) as used herein refers to a combination of vehicle systems which are used to deliver entertainment and information. In an example, the information may be delivered to the driver and the passengers of a vehicle/occupants through audio/ video interfaces, control elements like touch screen displays, button panel, voice commands, and more. Some of the main components of an in-vehicle infotainment systems are integrated head-unit, heads-up display, high-end Digital Signal Processors (DSPs), and Graphics Processing Units (GPUs) to support multiple displays, operating systems, Controller Area Network (CAN), Low-Voltage Differential Signaling (LVDS), and other network protocol support (as per the requirement), connectivity modules, automotive sensors integration, digital instrument cluster, etc.

The term "environment" or "surrounding" as used herein refers to surroundings and the space in which a vehicle is navigating. It refers to dynamic surroundings in which a vehicle is navigating which includes other vehicles, obstacles, pedestrians, lane boundaries, traffic signs and signals, speed limits, potholes, snow, water logging, etc.

The term "autonomous mode" as used herein refers to an operating mode which is independent and unsupervised.

The term "autonomous communication" as used herein comprises communication over a period with minimal supervision under different scenarios and is not solely or completely based on pre-coded scenarios or pre-coded rules or a predefined protocol. Autonomous communication, in general, happens in an independent and an unsupervised manner. In an embodiment, a communication module is enabled for autonomous communication.

The term "communication system" or "communication module" as used herein refers to a system which enables the information exchange between two points. The process of transmission and reception of information is called communication. The major elements of communication include but are not limited to a transmitter of information, channel or medium of communication and a receiver of information.

The term "connection" as used herein refers to a communication link. It refers to a communication channel that connects two or more devices for the purpose of data transmission. It may refer to a physical transmission medium such as a wire, or to a logical connection over a multiplexed medium such as a radio channel in telecommunications and computer networking. A channel is used for the information transfer of, for example, a digital bit stream, from one or several senders to one or several receivers. A channel has a certain capacity for transmitting information, often measured by its bandwidth in Hertz (Hz) or its data rate in bits per second. For example, a Vehicle-to-Vehicle (V2V) communication may wirelessly exchange information about the speed, location and heading of surrounding vehicles.

The term "communication" as used herein refers to the transmission of information and/or data from one point to another. Communication may be by means of electromagnetic waves. It is also a flow of information from one point, known as the source, to another, the receiver. Communication comprises one of the following: transmitting data, instructions, and information or a combination of data, instructions, and information. Communication happens between any two communication systems or communicating units. The term "in communication with" may refer to any coupling, connection, or interaction using electrical signals to exchange information or data, using any system, hardware, software, protocol, or format, regardless of whether the exchange occurs wirelessly or over a wired connection. The term communication includes systems that combine other more specific types of communication, such as V2I (Vehicle-to-Infrastructure), V2I (Vehicle-to-Infrastructure), V2N (Vehicle-to-Network), V2V (Vehicle-to-Vehicle), V2P (Vehicle-to-Pedestrian), V2D (Vehicle-to-Device) and V2G (Vehicle-to-Grid) and Vehicle-to-Everything (V2X) communication.

Further, the communication apparatus is configured on a computer with the communication function and is connected for bidirectional communication with the on-vehicle emergency report apparatus by a communication line through a radio station and a communication network such as a public telephone network or by satellite communication through a communication satellite. The communication apparatus is adapted to communicate, through the communication network, with communication terminals.

The term "vehicle to vehicle (V2V) communication" refers to the technology that allows vehicles to broadcast and receive messages. The messages may be omni-directional messages, creating a 360-degree "awareness" of other vehicles in proximity. Vehicles may be equipped with appropriate software (or safety applications or traffic condition detection) that can use the messages from surrounding vehicles to determine potential crash threats as they develop.

The term "protocol" as used herein refers to a procedure required to initiate and maintain communication; a formal set of conventions governing the format and relative timing of message exchange between two communications terminals; a set of conventions that govern the interaction of processes, devices, and other components within a system; a set of signaling rules used to convey information or commands between boards connected to the bus; a set of signaling rules used to convey information between agents; a set of semantic and syntactic rules that determine the behavior of entities that interact; a set of rules and formats (semantic and syntactic) that determines the communication behavior of simulation applications; a set of conventions or rules that govern the interactions of processes or applications within a computer system or network; a formal set of conventions governing the format and relative timing of message exchange in a computer system; a set of semantic and syntactic rules that determine the behavior of functional units in achieving meaningful communication; a set of semantic and syntactic rules for exchanging information.

The term "V2X communication" as used herein refers to transmission of information from a vehicle to any entity that may affect the vehicle, and vice versa. Depending on the underlying technology employed, there are two types of V2X communication technologies: cellular networks and other technologies that support direct device-to-device communication (such as Dedicated Short-Range Communication (DSRC), Port Community System (PCS), Bluetooth^{®}, Wi-Fi^{®}, etc.).

The term "communication protocol" as used herein refers to standardized communication between any two systems. An example communication protocol is a DSRC protocol. The DSRC protocol uses a specific frequency band (e.g., 5.9 GHz) and specific message formats (such as the Basic Safety Message, Signal Phase and Timing, and Roadside Alert ) to enable communications between vehicles and infrastructure components, such as traffic signals and roadside sensors. DSRC is a standardized protocol, and its specifications are maintained by various organizations, including the IEEE and SAE International.

The term "bidirectional communication" as used herein refers to an exchange of data between two components. In an example, the first component can be a vehicle and the second component can be an infrastructure that is enabled by a system of hardware, software, and firmware.

The term "alert" or "alert signal" refers to a communication to attract attention. An alert may include visual, tactile, audible alert, and a combination of these alerts to warn drivers or occupants. These alerts allow receivers, such as drivers or occupants, the ability to react and respond quickly.

The term "in communication with" as used herein, refers to any coupling, connection, or interaction using signals to exchange information, message, instruction, command, and/or data, using any system, hardware, software, protocol, or format regardless of whether the exchange occurs wirelessly or over a wired connection.

As used herein, the term "traffic light" refers to a light used to control the movement of traffic. Traffic lights may be placed at road intersections and crossings. Traffic lights consist normally of three signals, transmitting meaningful information to drivers and riders through colors and symbols including arrows and bicycles. The regular traffic light colors are red, yellow (also known as amber), and green arranged vertically or horizontally in that order. Although this is internationally standardized, variations exist on national and local scales as to traffic light sequences and laws.

As used herein, the term "traffic light cycle" refers to the time required for a complete sequence of indications. In an embodiment, cycle lengths may be the same for all intersections in the coordination plan to maintain a consistent time based relationship. The traffic light cycle is one complete rotation through all of the indications provided. The traffic light cycle length is the time in seconds that it takes a signal to complete one full cycle of indications. The traffic light cycle length indicates the time interval between the starting of green for one approach till the next time the green starts.

As used herein, the term "intersection area" refers to an area shared by two or more roads. The intersection area is designated for the vehicles to turn to different directions to reach their desired destinations. Intersection areas may be controlled by traffic signs, traffic signal lights, or both.

As used herein, the term "intersection area information" refers to the information of the intersection area comprising at least one of the length of the intersection area, traffic signs and/or traffic lights at the intersection area, number of roads intersecting at the intersection area, obstruction information, start point and end point of the intersection area etc.

As used herein, the term "last vehicle" refers to the vehicle at the end of any event (e.g., group of vehicles that can pass the intersection area). The vehicle behind the last vehicle (i.e., trailing vehicle) cannot pass through the intersection area and would obstruct the intersection area.

As used herein, the term "trailing vehicle" refers to the vehicle behind the desired vehicle. The desired vehicle may be one of an autonomous vehicle, manual driven vehicle, or a semi-autonomous vehicle.

As used herein, the term "leading vehicle" refers to the vehicle ahead of the desired vehicle. The desired vehicle may be one of an autonomous vehicle, manual driven vehicle, and a semi-autonomous vehicle.

As used herein, the term "continuous mobility" refers to uninterrupted seamless movement of vehicles. The term "continuous mobility" may further refer to passing the intersection area seamlessly and gradually.

As used herein, the term "electric drive unit" refers to a unit that can control the operation of various devices of the vehicle (e.g., autonomous vehicle, manual driven vehicle, semi-autonomous vehicle, etc.). The electric drive unit is responsible for enabling the mobility of the vehicle.

As used herein, the term "obstruct" refers to block or get in the way of something or someone, or to prevent something from happening or progressing by causing difficulties.

As used herein, the term "continuous mobility" refers to movement of vehicles on the road without obstruction at the intersection area. The vehicles may stop before the start point of intersection or post the end point of the intersection area in order to enable continuous mobility to the other vehicles in adjacent lanes sharing the intersection area.

As used herein, the term "lane change information" refers to maneuvering guidance having information related to lane switch over. The lane change information comprises the details of the lane (lane direction, lane position, lane distance, etc.) on which the switch over is to be done.

As used herein, the term "threshold speed" refers to a minimum speed at which the vehicles move when there is no traffic or obstruction. The threshold speed may also be the minimum speed that the vehicles move at the intersection area when there is no obstruction. Below the threshold speed, the vehicle obstructs the other vehicles.

As used herein, the term "threshold space" refers to a minimum space within the image of the region of interest adapted to analyze the image and determine the number or count of vehicles. The number of vehicles or the count of vehicles may be computed to determine the traffic condition.

As used herein, the term "third party service" refers to any unaffiliated person, company, or entity that performs services for a company. Third-party service providers may be paid for their services, but do not have a stake, share, or equity in the company. Third-party service providers may also be free of cost for their services. Third-party services may also be web-based technologies that are not exclusively operated or controlled by a government entity or that involve significant participation of a non-government entity.

As used herein, the term "prestored traffic condition" refers to a traffic condition prestored based on history of traffic conditions recorded so far. The prestored traffic condition may be used to fix an opening value for computing the real-time traffic condition. The prestored traffic condition may be stored in advance of being needed.

As used herein, the term "current time" refers to time occurring in or existing at the present. In the context of time series analysis, the current time is the timestamp of the most recent observation. The current time is always going to be some non-zero instant in the past.

As used herein, the term "real-time location" refers to a location of someone or something in real-time. The real-time location may be determined continually or when interrogated.

As used herein, the term "peak hour" refers to a period of heavy traffic. The peak hour may be especially at the beginning or end of a workday. In an embodiment, peak hour refers to any hours of the day during which most of the persons travel for some reasons (e.g., commute for work, return from work, etc.).

As used herein, the term "working hour" refers to a period of regular traffic. The working hour may be the usual time most people spend at work during a day. In an embodiment, working hour refers to any hours of the day during which work is done.

As used herein, the term "video analytics" refers to a practical solution for reviewing hours of video (e.g., surveillance video) to identify incidents that are pertinent to what you are looking for. Video analytics is adapted to automatically generate descriptions of what is actually happening in the video (so-called metadata), which can be used to list persons, cars and other objects detected in the video stream (e.g., intersection area, signal, crossings, traffic, congestion, obstruction, etc.), as well as their appearance and movements.

As used herein, the term "start point" refers to a lane marking at the beginning of the intersection area.

As used herein, the term "end point" refers to a lane marking at the end of the intersection area.

As used herein, the term "region of interest" refers to a portion of an image that you want to filter or operate on in some way. The region of interest (often abbreviated ROI) is a sample within a data set identified for a particular purpose.

As used herein, the term "real-time traffic data" refers to data that can be used to ascertain current traffic conditions for map display and route guidance, including alternative routing when a traffic incident is detected on the planned route.

The term "cyber security" as used herein refers to application of technologies, processes, and controls to protect systems, networks, programs, devices, and data from cyber-attacks.

The term "cyber security module" as used herein refers to a module comprising application of technologies, processes, and controls to protect systems, networks, programs, devices and data from cyber-attacks and threats. It aims to reduce the risk of cyber-attacks and protect against the unauthorized exploitation of systems, networks, and technologies. It includes, but is not limited to, critical infrastructure security, application security, network security, cloud security, Internet of Things (IoT) security.

The term "encrypt" used herein refers to securing digital data using one or more mathematical techniques, along with a password or "key" used to decrypt the information. It refers to converting information or data into a code, especially to prevent unauthorized access. It may also refer to concealing information or data by converting it into a code. It may also be referred to as cipher, code, encipher, encode. A simple example is representing alphabets with numbers - say, 'A' is '01', 'B' is '02', and so on. For example, a message like "HELLO" will be encrypted as "0805121215," and this value will be transmitted over the network to the recipient(s).

The term "decrypt" used herein refers to the process of converting an encrypted message back to its original format. It is generally a reverse process of encryption. It decodes the encrypted information so that only an authorized user can decrypt the data because decryption requires a secret key or password. This term could be used to describe a method of unencrypting the data manually or unencrypting the data using the proper codes or keys.

The term "cyber security threat" used herein refers to any possible malicious attack that seeks to unlawfully access data, disrupt digital operations, or damage information. A malicious act includes but is not limited to damage data, steal data, or disrupt digital life in general. Cyber threats include, but are not limited to, malware, spyware, phishing attacks, ransomware, zero-day exploits, trojans, advanced persistent threats, wiper attacks, data manipulation, data destruction, rogue software, malvertising, unpatched software, computer viruses, man-in-the-middle attacks, data breaches, Denial of Service (DoS) attacks, and other attack vectors.

The term "hash value" used herein can be thought of as fingerprints for files. The contents of a file are processed through a cryptographic algorithm, and a unique numerical value, the hash value, is produced that identifies the contents of the file. If the contents are modified in any way, the value of the hash will also change significantly. Example algorithms used to produce hash values: the Message Digest-5 (MD5) algorithm and Secure Hash Algorithm-1 (SHA1).

The term "integrity check" as used herein refers to the checking for accuracy and consistency of system related files, data, etc. It may be performed using checking tools that can detect whether any critical system files have been changed, thus enabling the system administrator to look for unauthorized alteration of the system. For example, data integrity corresponds to the quality of data in the databases and to the level by which users examine data quality, integrity, and reliability. Data integrity checks verify that the data in the database is accurate, and functions as expected within a given application.

The term "alarm" as used herein refers to a trigger when a component in a system or the system fails or does not perform as expected. The system may enter an alarm state when a certain event occurs. An alarm indication signal is a visual signal to indicate the alarm state. For example, when a cyber security threat is detected, a system administrator may be alerted via sound alarm, a message, a glowing LED, a pop-up window, etc. Alarm indication signal may be reported downstream from a detecting device, to prevent adverse situations or cascading effects.

As used herein, the term "traffic condition" refers to a condition in transportation that is characterized by slower speeds, longer trip times, and increased vehicular queueing. Traffic conditions may comprise traffic congestion, traffic jams, etc. Traffic conditions may further comprise information regarding speed of the vehicles, direction of the vehicles, and the number of vehicles facing the traffic. In an embodiment, the traffic condition comprises real-time traffic data. In another embodiment, the traffic condition may be static and dynamic. In another embodiment, represents at least one of schematic, numerical or pictorial data representing present state of the vehicles along the route for a predefined interval. In yet another embodiment, the traffic condition refers to the mean velocity of vehicles at a fixed point on the road within a time slot.

The term "autonomous vehicle" also referred to as self-driving vehicle, driverless vehicle, robotic vehicle as used herein refers to a vehicle incorporating vehicular automation, that is, a ground vehicle that can sense its environment and move safely with little or no human input. Self-driving vehicles combine a variety of sensors to perceive their surroundings, such as thermographic cameras, Radio Detection and Ranging (radar), Light Detection and Ranging (lidar), Sound Navigation and Ranging (sonar), Global Positioning System (GPS), odometry and inertial measurement unit. Control systems, designed for the purpose, interpret sensor information to identify appropriate navigation paths, as well as obstacles and relevant signage.

As used herein, the term "semi-autonomous vehicle" refers to vehicles that can operate for extended periods with little human input. A semi-autonomous vehicle cannot drive itself at all times, but does automate some driving functions under ideal conditions like highway driving. A semi-autonomous vehicle may use "autopilot" features. In one embodiment, semi-autonomous vehicles may be able to keep in lane, and they may also be able to park themselves, but they are not self-driving. The semi-autonomous vehicles acts independently to some degree.

As used herein the term "connection" as used herein refers to a communication link. It refers to a communication channel that connects two or more devices for the purpose of data transmission. It may refer to a physical transmission medium such as a wire, or to a logical connection over a multiplexed medium such as a radio channel in telecommunications and computer networking. A channel is used for information transfer of, for example a digital bit stream, from one or several senders to one or several receivers. A channel has a certain capacity for transmitting information, often measured by its bandwidth in Hertz (Hz) or its data rate in bits per second. For example, a Vehicle-to-Vehicle (V2V) communication may wirelessly exchange information about the speed, location and heading of surrounding vehicles.

As used herein, the term "communication" refers to the transmission of information and/or data from one point to another. Communication may be by means of electromagnetic waves. It is also a flow of information from one point, known as the source, to another, the receiver. Communication comprises one of the following: transmitting data, instructions, and information or a combination of data, instructions, and information. Communication happens between any two communication systems or communicating units.

The term "in communication with" may refer to any coupling, connection, or interaction using electrical signals to exchange information or data, using any system, hardware, software, protocol, or format, regardless of whether the exchange occurs wirelessly or over a wired connection. The term communication includes systems that combine other more-specific types of communication, such as V2I (Vehicle-to-Infrastructure), V2I (Vehicle-to-Infrastructure), V2N (Vehicle-to-Network), V2V (Vehicle-to-Vehicle), V2P (Vehicle-to-Pedestrian), V2D (Vehicle-to-Device) and V2G (Vehicle-to-Grid) and Vehicle-to-Everything (V2X) communication. V2X communication is the transmission of information from a vehicle to any entity that may affect the vehicle, and vice versa. The main motivations for developing V2X are occupant safety, road safety, traffic efficiency and energy efficiency. Depending on the underlying technology employed, there are two types of V2X communication technologies: cellular networks and other technologies that support direct device-to-device communication (such as Dedicated Short-Range Communication (DSRC), Port Community System (PCS), Bluetooth^{®}, Wi-Fi^{®}, etc.).

As used herein, the term "vehicle to vehicle (V2V) communication" refers to the technology that allows vehicles to broadcast and receive messages. The messages may be omni-directional messages, creating a 360-degree "awareness" of other vehicles in proximity. Vehicles may be equipped with appropriate software (or safety applications) that can use the messages from surrounding vehicles to determine potential crash threats as they develop.

The term "protocol" as used herein refers to a procedure required to initiate and maintain communication; a formal set of conventions governing the format and relative timing of message exchange between two communications terminals; a set of conventions that govern the interaction of processes, devices, and other components within a system; a set of signaling rules used to convey information or commands between boards connected to the bus; a set of signaling rules used to convey information between agents; a set of semantic and syntactic rules that determine the behavior of entities that interact; a set of rules and formats (semantic and syntactic) that determines the communication behavior of simulation applications; a set of conventions or rules that govern the interactions of processes or applications within a computer system or network; a formal set of conventions governing the format and relative timing of message exchange in a computer system; a set of semantic and syntactic rules that determine the behavior of functional units in achieving meaningful communication; a set of semantic and syntactic rules for exchanging information.

The term "communication protocol" as used herein refers to standardized communication between any two systems. An example of a communication protocol is Health Level Seven (HL7). HL7 is a set of international standards used to provide guidance with transferring and sharing data between various healthcare providers. HL7 is a comprehensive framework for the exchange, integration, sharing, and retrieval of health information.

The term "bidirectional communication" as used herein refers to an exchange of data between two components. In an example, the first component can be a vehicle and the second component can be an infrastructure that is enabled by a system of hardware, software, and firmware. This communication is typically wireless.

The term "nearby vehicle" as used herein refers to surrounding vehicles of the user's vehicle and is within reach or beyond reach of at least a communication range of the user's vehicle, wherein the communication range is defined as the maximum distance where communication can exist between two antennas, one of which is user's vehicle antenna in a wireless network. In an embodiment, "nearby vehicle" is written as a surrounding vehicle, trailing vehicle, or leading vehicle. The nearby vehicle may also include vehicles from nearby lanes, opposite lanes, or adjacent lanes.

The term "maneuver" as used herein refers to carefully moving, steering, or driving a vehicle, in order to move from one point to another point.

As used herein, the term "probability" denotes the possibility of the outcome of any random event (e.g., the vehicle crossing the intersection area, vehicle crossing the intersection area as the last vehicle, etc.). The meaning of this term is to check the extent to which any event is likely to happen. The term probability can also be defined as the ratio of the number of favorable outcomes to the total number of outcomes of an event.

As used herein, the term "component" broadly construes hardware, firmware, and/or a combination of hardware, firmware, and software.

The embodiments described herein can be directed to one or more of a system, a method, an apparatus, and/or a computer program product at any possible technical detail level of integration. The computer program product can include a computer readable storage medium (or media) having computer readable program instructions thereon for causing a processor to carry out aspects of the one or more embodiments described herein. The computer readable storage medium can be a tangible device that can retain and store instructions for use by an instruction execution device. For example, the computer readable storage medium can be, but is not limited to, an electronic storage device, a magnetic storage device, an optical storage device, an electromagnetic storage device, a superconducting storage device, and/or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon and/or any suitable combination of the foregoing. A computer readable storage medium, as used herein, does not construe transitory signals per se, such as radio waves and/or other freely propagating electromagnetic waves, electromagnetic waves propagating through a waveguide and/or other transmission media (e.g., light pulses passing through a fiber-optic cable), and/or electrical signals transmitted through a wire.

Computer readable program instructions described herein are downloadable to respective computing/processing devices from a computer readable storage medium and/or to an external computer or external storage device via a network, for example, the Internet, a local area network, a wide area network and/or a wireless network. The network can comprise copper transmission cables, optical transmission fibers, wireless transmission, routers, firewalls, switches, gateway computers, and/or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the one or more embodiments described herein can be assembler instructions, instruction-set-architecture (ISA) instructions, machine instructions, machine dependent instructions, microcode, firmware instructions, state-setting data, configuration data for integrated circuitry, and/or source code and/or object code written in any combination of one or more programming languages, including an object oriented programming language such as Smalltalk, C++ or the like, and/or procedural programming languages, such as the "C" programming language and/or similar programming languages. The computer readable program instructions can execute entirely on a computer, partly on a computer, as a stand-alone software package, partly on a computer and/or partly on a remote computer or entirely on the remote computer and/or server. In the latter scenario, the remote computer can be connected to a computer through any type of network, including a local area network (LAN) and/or a wide area network (WAN), and/or the connection can be made to an external computer (for example, through the Internet using an Internet Service Provider). In one or more embodiments, electronic circuitry including, for example, programmable logic circuitry, field-programmable gate arrays (FPGA), and/or programmable logic arrays (PLA) can execute the computer readable program instructions by utilizing state information of the computer readable program instructions to personalize the electronic circuitry, in order to perform aspects of the one or more embodiments described herein.

Aspects of the one or more embodiments described herein are described with reference to flowchart illustrations and/or block diagrams of methods, apparatus (systems), and computer program products according to one or more embodiments described herein. Each block of the flowchart illustrations and/or block diagrams, and combinations of blocks in the flowchart illustrations and/or block diagrams, can be implemented by computer readable program instructions. These computer readable program instructions can be provided to a processor of a general purpose computer, special purpose computer and/or other programmable data processing apparatus to produce a machine, such that the instructions, which execute via the processor of the computer or other programmable data processing apparatus, can create means for implementing the functions/acts specified in the flowchart and/or block diagram block or blocks. These computer readable program instructions can also be stored in a computer readable storage medium that can direct a computer, a programmable data processing apparatus and/or other devices to function in a particular manner, such that the computer readable storage medium having instructions stored therein can comprise an article of manufacture including instructions which can implement aspects of the function/act specified in the flowchart and/or block diagram block or blocks. The computer readable program instructions can also be loaded onto a computer, other programmable data processing apparatus and/or other device to cause a series of operational acts to be performed on the computer, other programmable apparatus and/or other device to produce a computer implemented process, such that the instructions which execute on the computer, other programmable apparatus and/or other device implement the functions/acts specified in the flowchart and/or block diagram block or blocks.

The flowcharts and block diagrams in the figures illustrate the architecture, functionality and/or operation of possible implementations of systems, computer-implementable methods and/or computer program products according to one or more embodiments described herein. In this regard, each block in the flowchart or block diagrams can represent a module, segment and/or portion of instructions, which comprises one or more executable instructions for implementing the specified logical function(s). In one or more alternative implementations, the functions noted in the blocks can occur out of the order noted in the Figures. For example, two blocks shown in succession can be executed substantially concurrently, and/or the blocks can sometimes be executed in the reverse order, depending upon the functionality involved. It will also be noted that each block of the block diagrams and/or flowchart illustration, and/or combinations of blocks in the block diagrams and/or flowchart illustration, can be implemented by special purpose hardware-based systems that can perform the specified functions and/or acts and/or carry out one or more combinations of special purpose hardware and/or computer instructions.

While the subject matter described herein is in the general context of computer-executable instructions of a computer program product that runs on a computer and/or computers, those skilled in the art will recognize that the one or more embodiments herein also can be implemented in combination with one or more other program modules. Program modules include routines, programs, components, data structures, and/or the like that perform particular tasks and/or implement particular abstract data types. Moreover, other computer system configurations, including single-processor and/or multiprocessor computer systems, mini-computing devices, mainframe computers, as well as computers, hand-held computing devices (e.g., PDA, phone), microprocessor-based or programmable consumer and/or industrial electronics and/or the like can practice the herein described computer-implemented methods. Distributed computing environments, in which remote processing devices linked through a communications network perform tasks, can also practice the illustrated aspects. However, stand-alone computers can practice one or more, if not all aspects of the one or more embodiments described herein. In a distributed computing environment, program modules can be located in both local and remote memory storage devices.

As used in this application, the terms "component, " "system, " "platform, " "interface, " and/or the like, can refer to and/or can include a computer-related entity or an entity related to an operational machine with one or more specific functionalities. The entities described herein can be either hardware, a combination of hardware and software, software, or software in execution. For example, a component can be, but is not limited to being, a process running on a processor, a processor, an object, an executable, a thread of execution, a program and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system and/or across a network such as the Internet with other systems via the signal). As another example, a component can be an apparatus with specific functionality provided by mechanical parts operated by electric or electronic circuitry, which is operated by a software and/or firmware application executed by a processor. In such a case, the processor can be internal and/or external to the apparatus and can execute at least a part of the software and/or firmware application. As yet another example, a component can be an apparatus that provides specific functionality through electronic components without mechanical parts, where the electronic components can include a processor and/or other means to execute software and/or firmware that confers at least in part the functionality of the electronic components. In an aspect, a component can emulate an electronic component via a virtual machine, e.g., within a cloud computing system.

As it is employed in the subject specification, the term "processor" can refer to any computing processing unit and/or device comprising, but not limited to, single-core processors; single-processors with software multi-thread execution capability; multi-core processors; multi-core processors with software multi-thread execution capability; multi-core processors with hardware multi-thread technology; parallel platforms; and/or parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, and/or any combination thereof designed to perform the functions described herein. Further, processors can exploit nano-scale architectures such as, but not limited to, molecular based transistors, switches and/or gates, in order to optimize space usage and/or to enhance performance of related equipment. A combination of computing processing units can implement a processor.

Herein, terms such as "store, " "storage, " "data store, " data storage, " "database, " and any other information storage component relevant to operation and functionality of a component refer to "memory components, " entities embodied in a "memory, " or components comprising a memory. Memory and/or memory components described herein can be either volatile memory or nonvolatile memory or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, and/or nonvolatile random access memory (RAM) (e.g., ferroelectric RAM (FeRAM). Volatile memory can include RAM, which can function as external cache memory, for example. By way of illustration and not limitation, RAM can be available in many forms such as synchronous RAM (SRAM), dynamic RAM (DRAM), synchronous DRAM (SDRAM), double data rate SDRAM (DDR SDRAM), enhanced SDRAM (ESDRAM), Synch link DRAM (SLDRAM), direct Rambus RAM (DRRAM), direct Rambus dynamic RAM (DRDRAM) and/or Rambus dynamic RAM (RDRAM). Additionally, the described memory components of systems and/or computer-implemented methods herein include, without being limited to including, these and/or any other suitable types of memory.

The embodiments described herein include mere examples of systems and computer-implemented methods. It is, of course, not possible to describe every conceivable combination of components and/or computer-implemented methods for purposes of describing the one or more embodiments, but one of ordinary skill in the art can recognize that many further combinations and/or permutations of the one or more embodiments are possible. Furthermore, to the extent that the terms "includes, " "has, " "possesses, " and the like are used in the detailed description, claims, appendices and/or drawings such terms are intended to be inclusive in a manner similar to the term "comprising" as "comprising" is interpreted when employed as a transitional word in a claim.

The descriptions of the one or more embodiments are for purposes of illustration but are not exhaustive or limiting to the embodiments described herein. Many modifications and variations will be apparent to those of ordinary skill in the art without departing from the scope and spirit of the described embodiments. The terminology used herein best explains the principles of the embodiments, the practical application and/or technical improvement over technologies found in the marketplace, and/or to enable others of ordinary skill in the art to understand the embodiments described herein.

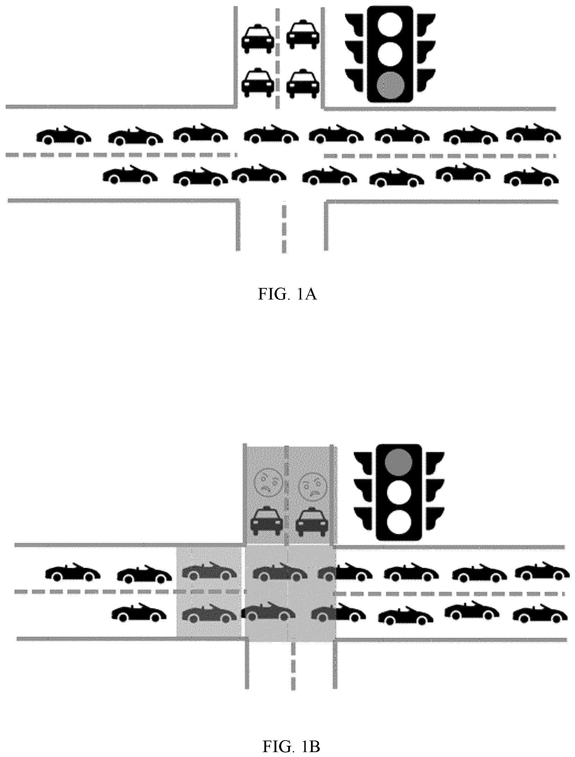

FIG. 1A-1B illustrates a traffic condition at an intersection area. The vehicles may move very slowly due to heavy traffic. The vehicles upon reaching an intersection area may wait for a signal from a traffic light. When the traffic light indicates a green signal, the vehicles start crossing the intersection area as shown in FIG. 1A. As the vehicles move very slowly, the traffic light is about to switch to a red signal. The vehicles may get stuck in the intersection area when the traffic light indicates the red signal as shown in FIG. 1B. The traffic light on the other route may indicate a green signal indicating to the vehicles on the other route to cross the intersection area. The vehicles on the other route are obstructed by the vehicles at the intersection area as shown in FIG. 1B. If the vehicles on the other route (stuck in intersection area) also cannot move, the traffic condition gets worse, contributing to the traffic jam. The above scenario can be faced by the manually driven vehicles, semi-autonomous vehicles, as well as the autonomous vehicles.

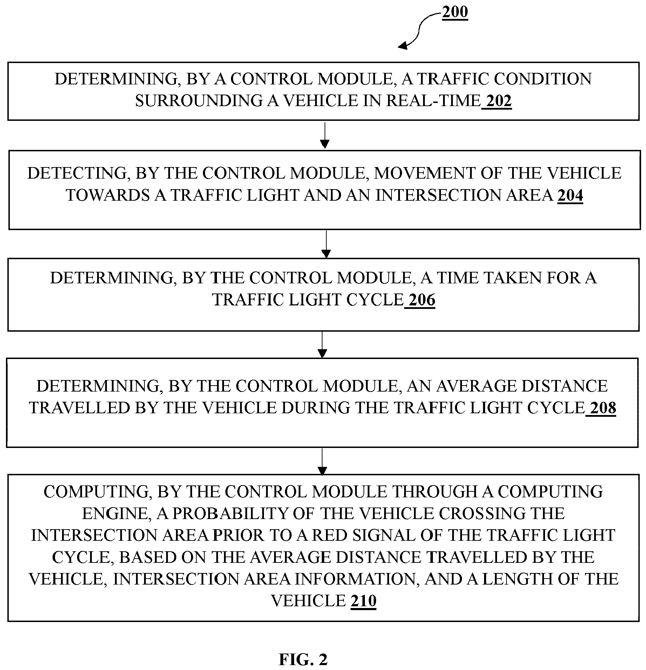

In an aspect, a method 200 is described to address the above situation. FIG. 2 illustrates the method 200 of handling intersection areas with heavy traffic, according to one or more embodiments. The method comprises the following steps. Step 202: A control module determines a traffic condition surrounding the vehicle in real-time; Step 204: The control module detects movement of the vehicle towards a traffic light and an intersection area; Step 206: The control module determines a time taken for a traffic light cycle; Step 208: The control module determines an average distance travelled by the vehicle during the traffic light cycle; and Step 210: The control module computes through a computing engine, a probability of the vehicle crossing the intersection area prior to a red signal of the traffic light cycle, based on the average distance travelled by the vehicle during the traffic light cycle, intersection area information, and a length of the vehicle. In an embodiment, the probability of the vehicle crossing the intersection area is set to true when computed that the vehicle crosses the intersection area prior to the red signal of the traffic light cycle. In another embodiment, the probability of the vehicle crossing the intersection area is set to false when computed that the vehicle obstructs the intersection area.

The control module computes the probability of the vehicle crossing the intersection area prior to the red signal of the traffic light cycle using the computing engine. The computing engine may comprise an artificial intelligence engine. The artificial intelligence engine may comprise a machine learning algorithm. The computing engine may receive inputs as the average distance travelled by the vehicle during the traffic light cycle, the intersection area information, and a length of the vehicle. In an embodiment, the intersection area information comprises the length of the intersection area. The control module via the computing engine analyses the received inputs and computes the probability of the vehicle crossing the intersection area prior to a red signal of the traffic light cycle. In an embodiment, the inputs may also comprise the distance between the vehicle and the start point of the intersection area. In another embodiment, the inputs may also comprise the distance between the vehicle and the end point of the intersection area. In yet another embodiment, the inputs may also comprise the current signal (e.g., green signal, yellow signal, etc.) of the traffic light.

The control module via the computing engine provides the output as true or false based on the comparison and analysis of the inputs received. The control module via the computing engine compares the average distance travelled by the vehicle with the length of the intersection area and the length of the vehicle. The control module via the computing engine then checks the current signal (e.g., green signal) of the traffic light. The control module via the computing engine then determines the time left for the traffic light to indicate the red signal. The control module via the computing engine then computes the probability of the vehicle crossing the intersection area prior to the red signal of the traffic light cycle based on the average distance travelled by the vehicle during the traffic light cycle, the intersection area information, the length of the vehicle, the current signal and the time left for the traffic light to indicate the red signal. The control module provides the output as true when it is computed that the vehicle crosses the intersection area prior to the red signal of the traffic light cycle. In an embodiment, the control module provides the output as false when it is computed that the vehicle obstructs the intersection area. In another embodiment, the control module is independently capable of performing all the above computations.

In an embodiment, upon detecting that the probability of the vehicle crossing the intersection area computed is set to true, the control module computes that the vehicle is the last vehicle to pass the intersection area prior to the red signal of the traffic light cycle. The control module further computes whether a trailing vehicle behind the vehicle obstructs the intersection area.

In another embodiment, the control module communicates a first message to a nearby vehicle upon predicting that the vehicle is the last vehicle to pass the intersection area prior to the red signal of the traffic light cycle. The first message may deliver a command to the nearby vehicle before the traffic light provides a signal to the nearby vehicle. The command to the nearby vehicle enables continuous mobility and upgrades the traffic condition. In yet another embodiment, the first message comprises a maneuvering guidance to the nearby vehicle.

In one embodiment, the control module provides a first command to an electric drive unit of the vehicle to pass the intersection area upon detecting the probability of the vehicle crossing the intersection area is set to true. The first command comprises details of speed, direction, a lane, a first distance between the vehicle and a leading vehicle, a second distance between the vehicle and a trailing vehicle, and lane change information. In another embodiment, the control module provides a second command to an electric drive unit of the vehicle to stop before the intersection area (i.e., start point of the intersection area) upon detecting the probability of the vehicle crossing the intersection area is set to false. The second command comprises details of a lane, a first distance between the vehicle and the intersection area, a second distance between the vehicle and a trailing vehicle, and lane change information.

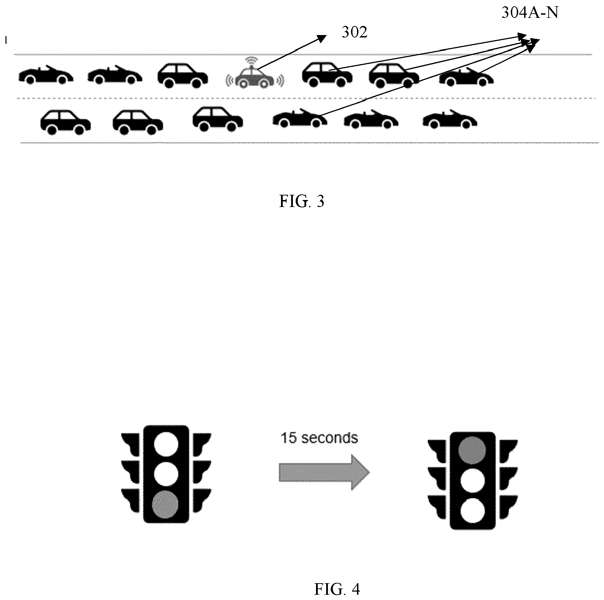

**FIG. 3** illustrates a detection of traffic conditions according to one or more embodiments. The control module determining the traffic condition surrounding the vehicle 302 in real-time comprises the following steps: monitoring a speed of the vehicle through a sensor; comparing the speed of the vehicle and a threshold speed limit; and determining the traffic condition surrounding the vehicle in real-time when the speed of the vehicle is less than the threshold speed limit. In one embodiment, the vehicle, via the control module, can also perform vehicle detection in its lane and surrounding lane. The control module performs the vehicle detection using the object detection module. In an embodiment, the control module performs vehicle detection using a computer vision module. The control module can also detect the speed of the nearby vehicles 304A-N.

The control module determining the traffic condition surrounding the vehicle 302 in real-time (as shown in FIG. 3) comprises the following technical steps. The control module captures an image around the vehicle for a threshold space. The control module then performs image processing on the image. The control module then determines number of vehicles around the vehicle from the images. The control module further determines the traffic condition surrounding the vehicle in real-time when the number of vehicles is greater than a threshold number of vehicles (as shown in FIG. 3). The image processing comprises an object detection.

In one embodiment, the control module determining the traffic condition surrounding the vehicle in real-time comprises the following technical steps. The control module monitors a speed of a nearby vehicle through a sensor. The control module compares the speed of the nearby vehicle and a threshold speed. The control module then determines the traffic condition surrounding the vehicle in real-time when the speed of the vehicle is less than the threshold speed (as shown in FIG. 3).

In another embodiment, the control module may obtain the traffic condition surrounding the vehicle in real-time from a third party service. In yet another embodiment, the control module determining the traffic condition surrounding the vehicle in real-time comprises the following technical steps: the control module retrieves a prestored traffic condition from a traffic information database based on one of a current time and a real-time location of the vehicle, the control module determines through the computing engine whether the current time is one of a peak hour or a working hour, the control module then dynamically updates the prestored traffic condition through the computing engine based on the determination of whether the current time is one of the peak hour or the working hour. In yet another embodiment, the control module determining the traffic condition surrounding the vehicle in real-time comprises: computing the traffic condition using statistical data analysis of history of prestored traffic conditions from a traffic information database.

In yet another embodiment, the control module determines the traffic condition surrounding the vehicle in real-time by: receiving a real-time traffic data from a source; determining at least one of a speed, a distance, and a direction of a nearby vehicle in a route; detecting a count of nearby vehicles and corresponding directions surrounding the vehicle through a video analytics unit; determining that the nearby vehicle is having difficulty in navigation; and receiving the traffic condition from the nearby vehicle. The source comprises at least one of a closed-circuit television (CCTV) system, a third party service, a traffic flow sensor, a toll-payment device, mobile phone data, and connected car data.

In one embodiment, the control module detects the movement of the vehicle towards the traffic light and the intersection area using video analytics through the computing engine. In yet another embodiment, the control module detects the movement of the vehicle towards the traffic light and the intersection area by performing video analytics of a real-time video through the computing engine.

In yet another embodiment, the control module detecting the movement of the vehicle towards the traffic light and the intersection area comprises the following technical steps. The control module performs the image processing of an image through the computing engine. The image comprises a region of interest around the vehicle covering the traffic light and the intersection area. The image also comprises the vehicle and a nearby vehicle. The control module then scans the image and recognizes one of a traffic light, the intersection area, a red signal, a green signal, and a yellow signal from the image. The control module detects the movement of the vehicle towards the traffic light and the intersection area based on the recognition.

**FIG.** 4 illustrates a determination of time taken for a traffic light cycle, according to one or more embodiments. The control module is configured to determine the time taken for the traffic light cycle. In one embodiment, the traffic light cycle comprises an indication of a green signal, a yellow signal, and the red signal. The control module may determine the time taken for the traffic light cycle by retrieving the time taken for the traffic light cycle from a traffic information database based on a current time, and a real-time location of the vehicle. In one embodiment, the control module determining the time taken for the traffic light cycle comprises the following technical steps. The control module performs video analytics of a video through the computing engine. The video comprises a sequence of frames of a region of interest around the vehicle for a predefined period of time. The video comprises the sequence of frames comprising the vehicle and the traffic light. The control module is adapted for scanning the video and detecting an interval between a green signal and the red signal of the traffic light and vice-versa. The control signal then determines the time taken for the traffic light cycle based on the interval (as shown in FIG. 4).

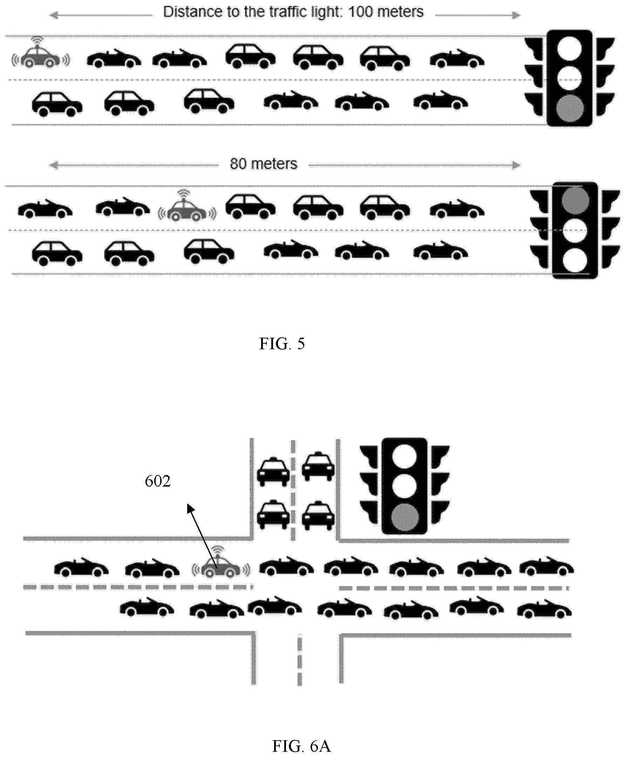

**FIG.** 5 illustrates a determination of average distance travelled by the vehicle during the traffic light cycle, according to one or more embodiments. The control module may be configured to determine the average distance travelled by the vehicle during the traffic light cycle. The control module determining the average distance travelled by the vehicle during the traffic light cycle comprises the following technical steps. The control module determines a first length moved by the vehicle during a first traffic light cycle. The control module determines a second length moved by the vehicle during a second traffic light cycle. The control module then determines a third length moved by the vehicle during a third traffic light cycle. The control module then calculates the average distance travelled by the vehicle during the traffic light cycle based on the first length, the second length, and the third length (as shown in FIG. 5).

For example, consider the vehicle is at a first distance D1 of 100 meters to the traffic light at a first instant for the first traffic light cycle. The control module determines the distance between the traffic light and the vehicle using a sensor (e.g., a GPS device, speed sensor, accelerometer, position sensor, location sensor, etc.). In some embodiments, the position sensor may include a GPS receiver. These GPS receivers can determine the vehicle's location and speed by processing signals transmitted from GPS satellites. After a predefined period of time (for example, 30 seconds), the control module then determines the distance between the traffic light and the vehicle. The second distance D2 between the traffic light and the vehicle at that instant is around 80 meters at a second instant for the second traffic light cycle. Similarly, the control module may determine the distance between the traffic light and the vehicle at different instants. The third distance D3 between the traffic light and the vehicle at that instant is around 60 meters at a third instant for the third traffic light cycle. The control module then determines the average distance travelled during the traffic light cycle. The average distance is determined by adding D1 + D2 + D3 and then dividing by y. The integer "y" refers to the number of instants that the distance has been calculated. In this scenario, the "y" is "3". The average distance calculated is equal to (100 + 80 + 60)/(3), 80. The average distance travelled by the vehicle is 80 meters.

**FIG. 6A** - **6D** illustrates a determination of probability of the vehicle 602 crossing the intersection area prior to a red signal of the traffic light cycle, according to one or more embodiments. The vehicle 602 comprises the control module. In an embodiment, the vehicle 602 may comprise a computing engine in addition to the control module. The computing engine may comprise an artificial intelligence engine. The artificial intelligence engine may comprise a machine learning algorithm. In another embodiment, the control module may be external to the vehicle 602. In another embodiment, the computing engine may also be external to the vehicle 602. The control module along with the computing engine may determine the probability of the vehicle 602 crossing the intersection area prior to the red signal of the traffic light cycle and communicate this to the vehicle 602, when the control module and the computing engine are external to the vehicle 602. The vehicle 602 may be an autonomous vehicle (self-driven vehicle), a semi-autonomous vehicle, and a manual-driven vehicle.

The control module computes, through the computing engine, the probability of the vehicle 602 crossing the intersection area prior to the red signal of the traffic light cycle is based on the average distance travelled by the vehicle 602, the intersection area information, and the length of the vehicle 602. The control module computing, through the computing engine, the probability of the vehicle 602 crossing the intersection area prior to the red signal of the traffic light cycle comprises the following technical steps. The control module obtains the intersection area information from one of a traffic information database, and a third-party service. The control module then recognizes a current signal of the traffic light cycle in real-time. In an embodiment, the control module then recognizes a current signal of the traffic light cycle in real-time through a computer vision module. In an embodiment, the control module then recognizes a current signal of the traffic light cycle in real-time through an object detection module.

The control module then recognizes a current signal of the traffic light cycle in real-time by performing traffic signal detection. The control module performs the traffic signal detection by executing the following technical steps. The control module performs a color space conversion by converting the input image into a HSV color space image. The input image comprises the real-time image of the traffic light. The control module performs a filtering, based on a predetermined pass range of a standard color of each of the traffic signs, of the HSV color space image to obtain a filtered image. The control module then generates one or more connected domains based on one or more regions in the filtered image. The control module then removes, based on a standard rule of the corresponding traffic sign, at least one of the generated connected domains, not being the corresponding traffic signal. The control module then lets others of the generated connected domains be candidate traffic sign domains. The control module then recognizes, based on a feature of each of the candidate traffic sign domains, the corresponding traffic signal.

In one embodiment, the intersection area information may be acquired by accessing a traffic information database. The traffic information database may comprise a map database having information about intersections (crossings), pedestrian crossings, corners, schools, and the like located on a navigation route or close to the vehicle. In another embodiment, the intersection area information may be acquired from a global positioning device. The global positioning device may be located nearby the intersection area.

The intersection area information may comprise intersection positioning data. In an embodiment, the system comprises an integrated radar sensor to determine the intersection positioning data. The integrated radar sensor is configured to detect a plurality of objects relative to an intersection. The plurality of objects comprises a plurality of vehicles. The control module tracks the plurality of detected objects to determine tracking data. The tracking includes determining a number of detected objects and determining speeds and positions of the plurality of detected objects. The control module then transmits the tracking data to at least one of the plurality of detected objects. The tracking data includes the number of detected objects and the speeds and positions of the plurality of detected objects. The control module then transmits a collision warning signal to at least one of the plurality of detected objects based on the number of detected objects, the speeds, and positions of the plurality of detected objects, the predetermined average travel time through the intersection, and the predetermined number of vehicles that can enter and exit the intersection during a traffic light cycle.

The length of the vehicle 602 may be prestored within a database. The control module may extract the length of the vehicle 602. In one embodiment, the control module, in association with the computing engine, may perform a vehicle model recognition based on the image of the vehicle. The image of the vehicle is compared with prestored vehicle models. The prestored vehicle models may be updated periodically based on updates in the market. The control module, in association with the computing engine, performs the vehicle model recognition based on the comparisons and identifies the model of the vehicle in the image. The computing engine may then extract the specifications (including dimensions, length, etc.) of the model of the vehicle and extract the length of the vehicle.

The control module then assesses the probability of the vehicle 602 crossing the intersection area prior to the red signal of the traffic light cycle based on the average distance travelled by the vehicle 602 during the traffic light cycle, the intersection area information, the current signal of the traffic light cycle, and the length of the vehicle 602. The average distance travelled calculation, during the traffic light cycle, has been discussed already above. The recognition of the current signal of the traffic light also has been discussed above.

The probability of the vehicle 602 crossing the intersection area is set to true when computed that the vehicle 602 crosses the intersection area prior to the red signal of the traffic light cycle. The probability of the vehicle 602 crossing the intersection area is set to false when computed that the vehicle 602 obstructs the intersection area.

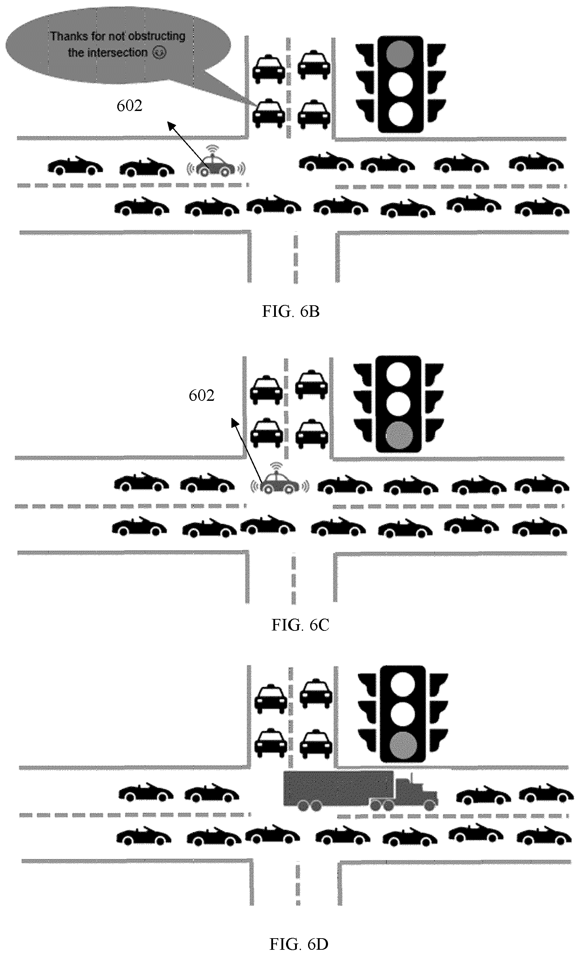

For example, consider the vehicle 602 moving towards the traffic light. The control module determines that the vehicle has moved 15 meters (as shown in FIG. 6A) during the traffic light cycle and the traffic light switches to the red signal in two seconds. The control module then compares the distance travelled by the vehicle with the average distance travelled i.e., 80 meters (calculation has been described above). The control module also compares the time left to switch to the red signal (i.e., 2 seconds) and the time taken for the traffic light cycle. As the distance travelled is less than the average distance travelled, the control module computes and concludes that the vehicle cannot pass through the intersection area prior to the red signal of the same traffic light and sets the probability to false. In an embodiment, the control module also takes account of the time left for the traffic light to switch to the red signal and the time taken for the traffic light cycle in determining the probability of crossing the intersection area. The control module then communicates a first command to an electric drive unit of the vehicle to stop before the start point of the intersection area (as shown in FIG. 6B). The electric drive unit manoeuvres the vehicle to stop (or to decelerate and stop) before crossing the intersection area prior to the red signal of the traffic light, based on the first command.

In one embodiment, the control module computes and concludes that the vehicle can pass through the intersection area prior to the red signal of the same traffic light cycle (as shown in FIG. 6C) and sets the probability to true, when the distance travelled is less than the average distance travelled. In another embodiment, the control module also takes into account the time left for the traffic light to switch to red signal and the time taken for the traffic light cycle in determining the probability of crossing the intersection area. The control module then communicates a second command to an electric drive unit of the vehicle to pass through the intersection area (as shown in FIG. 6B)

In one embodiment, the control module computing, through the computing engine, the probability of the vehicle crossing the intersection area prior to the red signal of the traffic light cycle comprises the following steps. The control module obtains the intersection area information, a pedestrian crossing length, a bike box length from one of a traffic information database, from a third-party service. The control module recognizes a current signal of the traffic light cycle in real-time. The control module assesses the probability of the vehicle crossing the intersection area prior to the red signal of the traffic light cycle based on the average distance travelled by the vehicle during the traffic light cycle, the intersection area information, the current signal of the traffic light cycle, the pedestrian crossing length, the bike box length, and the length of the vehicle. In an embodiment, the control module determines the bike box length and the pedestrian crossing by using one of an object detection module and a computer vision module. In an embodiment, the control module also considers the length of the vehicle in determining whether the vehicle has passed through the intersection area as shown in FIG. 6D.

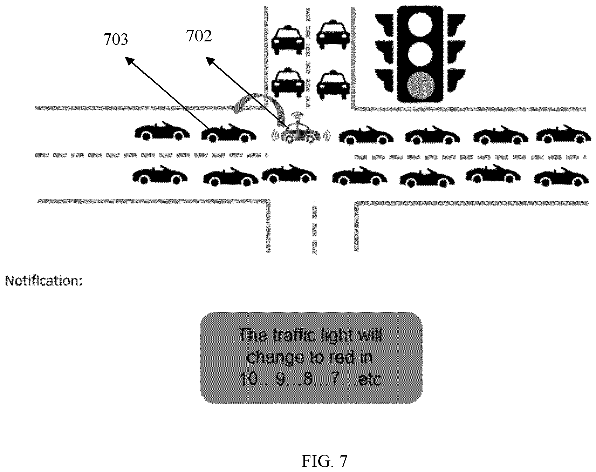

**FIG.** 7 illustrates a communication between the vehicle 702 and the trailing vehicle 703, according to one or more embodiments. The control module executes the following technical steps. The control module computes that the vehicle 702 is the last vehicle to pass the intersection area prior to the red signal of the traffic light cycle. The control module then communicates a notification to the trailing vehicle 703 from the vehicle 702. The notification comprises a message indicating a countdown timer for the traffic light to switch to the red signal. In an embodiment, the communication between the vehicle 702 and the trailing vehicle 703 is via a Vehicle-to-Vehicle (V2V) communication. The V2V communication may be based on a wireless communication protocol using at least one of a Dedicated Short-Range Communications (DSRC), and a Cellular Vehicle-to-Everything (C-V2X) technology. In another embodiment, the communication between the vehicle 702 and the trailing vehicle 703 is via an internet connection. The trailing vehicle 703 may act accordingly in response to the notification. The trailing vehicle 703 may also be a self-driving vehicle. In an embodiment, the control module may also take account of the length of the vehicle 702 in computing that the vehicle is the last vehicle to pass the intersection area.

In another embodiment, the control module computes that the vehicle is the last vehicle to pass the intersection area prior to the red signal of the traffic light cycle. The control module communicates a notification to a leading vehicle from the vehicle. The notification comprises a message indicating a manoeuvring guidance to the leading vehicle to upgrade the traffic condition around the intersection area. In an embodiment, the communication between the vehicle and the leading vehicle is via a Vehicle-to-Vehicle (V2V) communication. In another embodiment, the communication between the vehicle and the leading vehicle is via an internet connection. The control module may also take account of the length of the vehicle in computing that the vehicle is the last vehicle to pass through the intersection area.

In yet another embodiment, the control module determines that the vehicle has passed through the intersection area. The control module determining that the vehicle has passed the intersection area comprises the following technical steps. The control module captures a video ahead of the vehicle of a region of interest covering the vehicle and the intersection area in real-time. The control module then recognizes an end point of the intersection area from the video in real-time. In an embodiment, the control module recognizes the end point of the intersection area from the video in real-time through the computing engine using the object detection technique. The control module then determines that the vehicle has passed through the intersection area when the end point of the intersection area has passed from the video of the region of interest.

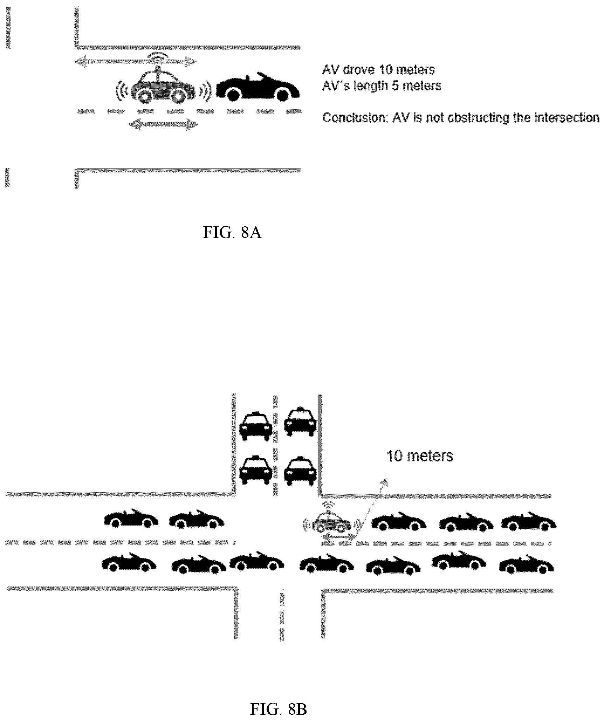

**FIG. 8A** - **8B** illustrates a determination of the vehicle passing the intersection area, according to one or more embodiments. The control module determining the vehicle passed the intersection area comprises the following technical steps. The control module measures a distance driven by the vehicle ahead of the end point of the intersection area. The control module compares the length of the vehicle and the distance driven by the vehicle. The control module determines that the vehicle passed the intersection area when the distance driven by the vehicle is greater than the length of the vehicle (as shown in FIG. 8A). For example, consider the length of the vehicle is 5 meters and the distance driven by the vehicle is 10 meters. The control module then determines and ensures that the vehicle passed the intersection area.

In another embodiment, the control module determining the vehicle passing the intersection area comprises the following technical steps. The control module measures a distance driven by the vehicle ahead of the end point of the intersection area. The control module compares the length of the vehicle and the distance driven by the vehicle. The control module determines that the vehicle is obstructing the intersection area when the distance driven by the vehicle is lesser than the length of the vehicle (as shown in FIG. 8B). For example, consider the length of the vehicle is 10 meters and the distance driven by the vehicle is 7 meters. The control module then determines and ensures that the vehicle obstructs the intersection area.

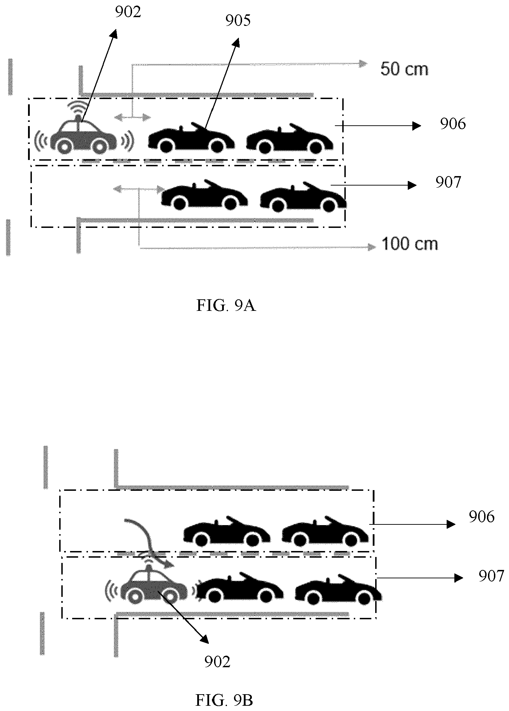

**FIG. 9A-9B** illustrate a lane detection, according to one or more embodiments. The control module first determines whether the vehicle 902 is obstructing the intersection area. The control module then executes the following technical steps to perform the lane detection. The control module measures a distance between the vehicle 902 and a leading vehicle 905 in a lane 906 and an adjacent lane 907. The control module compares the distance with the length of the vehicle 902. The control module communicates a third command to the electric drive unit of the vehicle 902 to one of move ahead to a predefined distance in the lane 906 (as shown in FIG. 9A), perform a lane change to the adjacent lane 907 (as shown in FIG. 9B) when the distance measured is "x" times greater than the length of the vehicle. The "x" may be predefined. In one embodiment, the "x" may be equal to 0.25. In one embodiment, the "x" may be equal to 0.5. For example, consider the distance between the vehicle 902 and the leading vehicle 905, in the lane 906, is 50 meters. Consider the distance between the vehicle 902 and the would-be leading vehicle in the adjacent lane 907 is 100 meters. The control module communicates a command to the elective drive unit to perform a lane change to the adjacent lane 907, as the distance in the adjacent lane 907 is greater than in lane 906 (as shown in FIG. 9B).

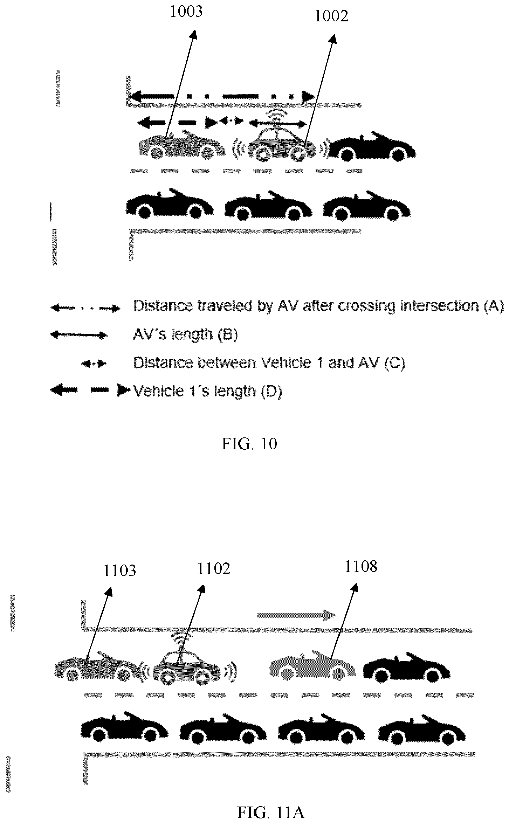

**FIG. 10** illustrates a determination of probability of the trailing vehicle 1003 behind the vehicle 1002 crossing the intersection area, according to one or more embodiments. The control module determining the probability of the trailing vehicle 1003, behind the vehicle 1002, passing through the intersection area comprises the following technical steps. The control module obtains a distance driven by the vehicle after crossing the intersection area. The control module then detects whether there is a trailing vehicle 1003 behind the vehicle 1002. In an embodiment, the control module detects the trailing vehicle 1003 using object detection via the computing engine (e.g., artificial intelligence engine). The control module then detects that the trailing vehicle 1003 is in the intersection area. The control module then obtains a model and a length of the trailing vehicle 1003. In an embodiment, the control module, via the computing engine, determines the model and the length of the trailing vehicle 1003 using a car model recognition algorithm. The control module then determines an extent of the intersection area (i.e., invading the intersection area) that the trailing vehicle 1003 is obstructing the intersection area based on the distance driven by the vehicle 1002 after crossing the intersection area (A in Fig. 10), the length of the trailing vehicle 1003 (D in Fig. 10), the length of the vehicle 1002 (B in Fig. 10), and a distance between the vehicle 1002 and the trailing vehicle 1003 (C in Fig. 10). V1 shown in FIG. 10 is the trailing vehicle 1003.

The control module estimates as below:
A= B+C+D Trailing Vehicle 1003 is not obstructing intersection
A> B+C+D Trailing Vehicle 1003 is not obstructing the intersection.
A< B+C+D Trailing Vehicle 1003 is obstructing the intersection.

**FIG. 11A** - **11C** illustrate a communication between the vehicle 1102 and the nearby vehicles to upgrade traffic conditions, according to one or more embodiments. The control module determines that the trailing vehicle 1103 is obstructing the intersection. The control module then honks to the leading vehicle 1108 in front of the vehicle 1102. When or if the leading vehicle 1108 moves further forward, the vehicle 1102 also moves further forward, and the trailing vehicle 1103 will move forward and obstruct the intersection less.

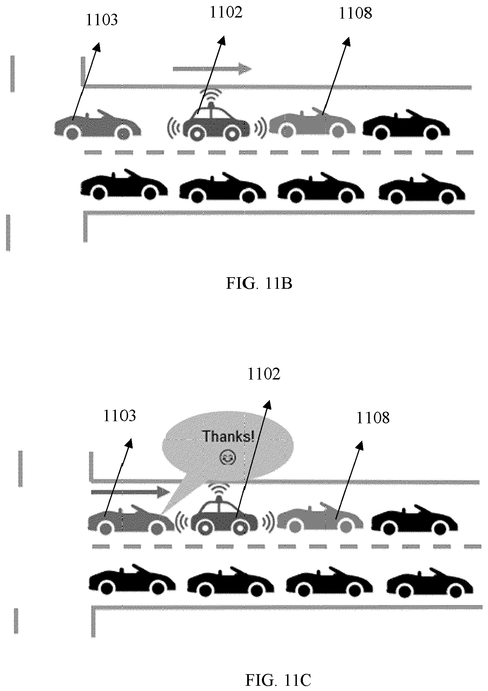

In one embodiment, the control module determines the extent of the intersection area that the trailing vehicle 1103 is obstructing. The control module executes the following technical steps. The control module communicates one of a first signal and a first notification to a leading vehicle 1108 to move ahead when the trailing vehicle 1103 is obstructing the intersection area. The control module monitors a movement of the leading vehicle 1108 (as shown in FIG. 11A). The control module manoeuvres the vehicle 1102, by an electric drive unit, in response to the movement of the leading vehicle 1108 (as shown in FIG. 11B). The control module then communicates one of a second signal and a second notification to a trailing vehicle 1103 to move ahead to a predefined position to minimize the obstruction of the intersection area (as shown in FIG. 11C). In one embodiment, if the leading vehicle 1108 does not move ahead despite receiving instructions or signals from the vehicle 1102, the control module monitors the leading vehicle 1108. Upon determining that the leading vehicle 1108 does not move ahead, the control module instructs the electric drive unit to manoeuvre the vehicle 1102 to move as close as possible to the leading vehicle 1108 anyway, to improve the trailing vehicle 1103 situation. The vehicle 1102 then communicates to the trailing vehicle 1103 to obstruct the intersection area as little as possible or to completely move away from the intersection area.

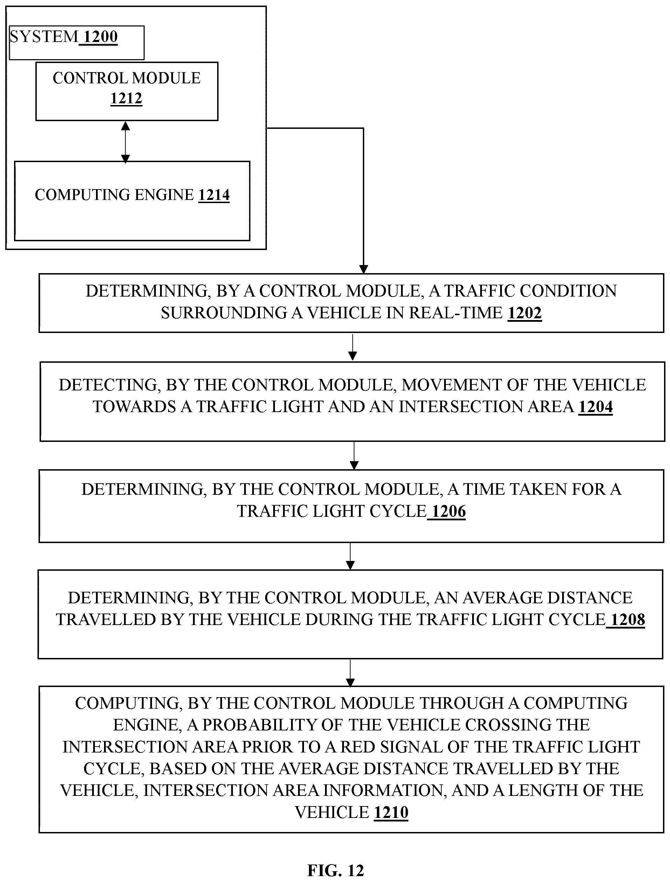

In another aspect, a system is described. FIG. 12 illustrates a system 1200, according to one or more embodiments. The system 1200 comprises a control module 1212 and a communication module. The system 1200 further comprises a computing engine 1214. The computing engine 1214 comprises an artificial intelligence engine. The artificial intelligence engine comprises a machine learning algorithm. The control module 1212 is operable to determine the traffic condition surrounding a vehicle in real-time at step 1202. At step 1204, the control module detects movement of the vehicle towards a traffic light and an intersection area. At step 1206, the control module determines a time taken for a traffic light cycle. At step 1208, the control module determines an average distance travelled by the vehicle during the traffic light cycle. At step 1210, the control module computes a probability of the vehicle crossing the intersection area prior to a red signal of the traffic light cycle, based on the average distance travelled by the vehicle, intersection area information, and a length of the vehicle. The probability of the vehicle crossing the intersection area is set to true when computed that the vehicle crosses the intersection area prior to the red signal of the traffic light cycle. The probability of the vehicle crossing the intersection area is set to false when computed that the vehicle obstructs the intersection area. In an embodiment, the system 1200 is configured to be a component of the vehicle.

In another embodiment, the control module 1212 is operable to compute that the vehicle is the last vehicle to pass the intersection area prior to the red signal of the traffic light cycle. In yet another embodiment, the control module 1212 is operable to communicate a first message to a nearby vehicle upon computing that the vehicle is the last vehicle to pass the intersection area prior to the red signal of the traffic light cycle. In yet another embodiment, the first message delivers a command to the nearby vehicle before the traffic light provides a signal to the nearby vehicle. In yet another embodiment, the command to the nearby vehicle enables continuous mobility to at least one of the vehicle and the nearby vehicle to upgrade the traffic condition. In yet another embodiment, the control module 1212 is operable to: provide a first command to an electric drive unit of the vehicle to pass the intersection area upon the probability of the vehicle crossing the intersection area is set to true. In yet another embodiment, the control module 1212 is operable to: provide a second command to an electric drive unit of the vehicle to stop before the intersection area upon the probability of the vehicle crossing the intersection area is set to false.

The computing engine 1214 may comprise at least one of a computer vision module, an object detection module, a car model recognition module, etc. The computing engine 1214 is configured to detect lanes, nearby vehicles, traffic signals, etc. The computing engine 1214, in association with the control module 1212, may be further configured to determine traffic conditions, detect movement of vehicle towards traffic light, determine traffic light cycle, determine whether the vehicle passes the intersection area, etc. The above determinations have been described in detail in this disclosure.

In an embodiment of the system, the communication module is enabled for at least one of a vehicle-to-vehicle (V2V) communication, a vehicle-to-infrastructure (V2I) communication, a vehicle-to-everything (V2X) communication, and a Vehicle-to-Network communication.

In an embodiment of the system, the vehicle-to-vehicle (V2V) communication is based on a wireless communication protocol using at least one of a Dedicated Short-Range Communications (DSRC) technology, and a Cellular Vehicle-to-Everything (C-V2X) technology.

In an embodiment of the system, the V2X communication includes at least one of a Vehicle-to-Network (V2N), Vehicle-to-Grid (V2G), Vehicle-to-Device (V2D), and Vehicle-to-Pedestrian (V2P).

In an embodiment of the system, the communication comprises transmitting at least one of data, an instruction, a message, and an information.

In an embodiment of the system, the communication module supports a communication protocol, wherein the communication protocol comprises at least one of a Advanced Message Queuing Protocol (AMQP), Message Queuing Telemetry Transport (MQTT) protocol, Simple (or Streaming) Text Oriented Message Protocol (STOMP), Zigbee protocol, Unified Diagnostic Services (UDS) protocol, Open Diagnostic exchange format (ODX) protocol, Diagnostics Over Internet Protocol (DoIP), On-Board Diagnostics (OBD) protocol, and a predefined protocol standard.

In an embodiment, the system comprises a computing engine.

In an embodiment, the computing engine comprises an artificial intelligence engine.

In one embodiment, the artificial intelligence engine comprises a machine learning model.

In an embodiment of the system, the machine learning model is configured to learn using labelled data using a supervised learning method, wherein the supervised learning method comprises logic using at least one of a decision tree, a logistic regression, a support vector machine, a k-nearest neighbors, a Naive Bayes, a random forest, a linear regression, a polynomial regression, and a support vector machine for regression.

In an embodiment of the system, the machine learning model is configured to learn from real-time data using an unsupervised learning method, wherein the unsupervised learning method comprises logic using at least one of a k-means clustering, a hierarchical clustering, a hidden Markov model, and an apriori algorithm.

In an embodiment of the system, the machine learning model has a feedback loop, wherein an output from a previous step is fed back to the model in real-time to improve performance and accuracy of the output of a next step.

In an embodiment of the system, the machine learning model comprises a recurrent neural network model.

In an embodiment of the system, the machine learning model has a feedback loop, wherein the learning is further reinforced with a reward for each true positive of the output of the system.

In an embodiment, the system further comprises a cyber security module wherein the cyber security module comprises an information security management module providing isolation between the communication module and servers.

In an embodiment, the information security management module is operable to, receive data from the communication module, exchange a security key at a start of the communication between the communication module and the server, receive the security key from the server, authenticate an identity of the server by verifying the security key, analyze the security key for a potential cyber security threat, negotiate an encryption key between the communication module and the server, encrypt the data; and transmit the encrypted data to the server when no cyber security threat is detected.

In an embodiment, the information security management module is operable to exchange a security key at a start of the communication between the communication module and the server, receive the security key from the server, authenticate an identity of the server by verifying the security key, analyze the security key for a potential cyber security threat, negotiate an encryption key between the system and the server, receive encrypted data from the server, decrypt the encrypted data, perform an integrity check of the decrypted data and transmit the decrypted data to the communication module when no cyber security threat is detected.

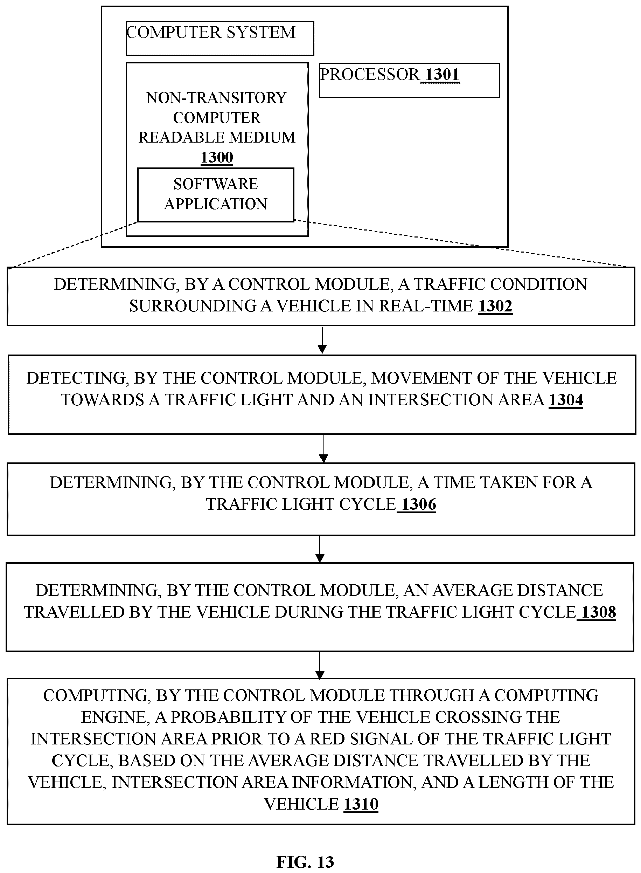

In yet another aspect, a non-transitory computer readable medium. FIG. 13 illustrates a non-transitory computer readable medium 1300, according to one or more embodiments. The non-transitory computer readable medium 1300 stores a sequence of instructions, which when executed by a processor 1301 causes: determining a traffic condition surrounding a vehicle in real-time at 1302; detecting movement of the vehicle towards a traffic light and an intersection area at 1304; determining a time taken for a traffic light cycle at 1306; determining an average distance travelled by the vehicle during the traffic light cycle at 1308; and computing, through a computing engine, a probability of the vehicle crossing the intersection area prior to a red signal of the traffic light cycle, based on the average distance travelled by the vehicle, intersection area information, and a length of the vehicle at 1310. The probability of the vehicle crossing the intersection area is set to true when computed that the vehicle crosses the intersection area prior to the red signal of the traffic light cycle. The probability of the vehicle crossing the intersection area is set to false when computed that the vehicle obstructs the intersection area. The computing engine may comprise an artificial intelligence engine.

In an embodiment, the non-transitory computer readable medium 1300 further causes computing that the vehicle is the last vehicle to pass the intersection area prior to the red signal of the traffic light cycle. In an embodiment, the non-transitory computer readable medium 1300, further causes: communicating a first message to a nearby vehicle upon computing that the vehicle is the last vehicle to pass the intersection area prior to the red signal of the traffic light cycle. In an embodiment, the non-transitory computer readable medium 1300, further causes: providing a first command to an electric drive unit of the vehicle to pass the intersection area upon the probability of the vehicle crossing the intersection area is set to true. In an embodiment, the non-transitory computer readable medium 1300, further causes: providing a second command to an electric drive unit of the vehicle to stop before the intersection area upon the probability of the vehicle crossing the intersection area is set to false.

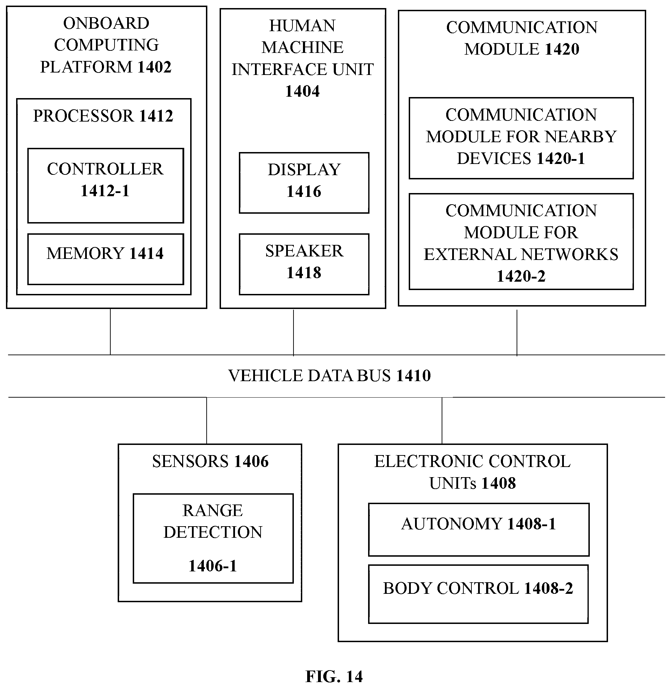

FIG. 14 is a block diagram of electronic components of a vehicle. In the illustrated example, the electronic components include an onboard computing platform 1402, a human-machine interface (HMI) unit 1404, the communication module 1420, sensors 1406, electronic control units (ECUs) 1408, and a vehicle data bus 1410.

The onboard computing platform 1402 includes a processor 1412 (also referred to as a microcontroller unit or a controller) and memory 1414. In the illustrated example, the processor 1412 of the onboard computing platform 1402 is structured to include the controller 1412-1. In other examples, the controller 1412-1 is incorporated into another ECU with its own processor and memory. The processor 1412 may be any suitable processing device or set of processing devices such as, but not limited to, a microprocessor, a microcontroller-based platform, an integrated circuit, one or more field programmable gate arrays (FPGAs), and/or one or more application-specific integrated circuits (ASICs). The memory 1414 may be volatile memory (e.g., RAM including non-volatile RAM, magnetic RAM, ferroelectric RAM, etc.), non-volatile memory (e.g., disk memory, FLASH memory, EPROMs, EEPROMs, memristor-based non-volatile solid-state memory, etc.), unalterable memory (e.g., EPROMs), read-only memory, and/or high-capacity storage devices (e.g., hard drives, solid state drives, etc.). In some examples, the memory 1414 includes multiple kinds of memory, particularly volatile memory and non-volatile memory. The memory 1414 is computer readable media on which one or more sets of instructions, such as the software for operating the methods of the present disclosure, can be embedded. The instructions may embody one or more of the methods or logic as described herein. For example, the instructions reside completely, or at least partially, within any one or more of the memory 1414, the computer readable medium, and/or within the processor 1412 during execution of the instructions.

The HMI unit 1404 provides an interface between the vehicle and the user. The HMI unit 1404 includes digital and/or analog interfaces (e.g., input devices and output devices) to receive input from, and display information for, the user(s). The input devices include, for example, a control knob, an instrument panel, a digital camera for image capture and/or visual command recognition, a touch screen, an audio input device (e.g., cabin microphone), buttons, or a touchpad. The output devices may include instrument cluster outputs (e.g., dials, lighting devices), haptic devices, actuators, a display 1416 (e.g., a heads-up display, a center console display such as a liquid crystal display (LCD), an organic light emitting diode (OLED) display, a flat panel display, a solid state display, etc.), and/or a speaker 1418. For example, the display 1416, the speaker 1418, and/or other output device(s) of the HMI unit 1404 are configured to emit an alert, such as an alert to request manual takeover, to an operator (e.g., a driver) of the vehicle. Further, the HMI unit 1404 of the illustrated example includes hardware (e.g., a processor or controller, memory, storage, etc.) and software (e.g., an operating system, etc.) for an infotainment system that is presented via the display 1416.

The sensors 1406 are arranged in and/or around the vehicle to monitor properties of the vehicle and/or an environment in which the vehicle is located. One or more of the sensors 1406 may be mounted to measure properties around an exterior of the vehicle. Additionally, or alternatively, one or more of the sensors 1406 may be mounted inside a cabin of the vehicle or in a body of the vehicle (e.g., an engine compartment, wheel wells, etc.) to measure properties of the vehicle and/or interior of the vehicle. For example, the sensors 1406 include accelerometers, odometers, tachometers, pitch and yaw sensors, wheel speed sensors, microphones, tire pressure sensors, biometric sensors, ultrasonic sensors, infrared sensors, Light Detection and Ranging (lidar), Radio Detection and Ranging System (radar), Global Positioning System (GPS), cameras and/or sensors of any other suitable type. In the illustrated example, the sensors 1406 include the range-detection sensors that are configured to monitor object(s) located within a surrounding area of the vehicle.

The ECUs 1408 monitor and control the subsystems of the vehicle. For example, the ECUs 1408 are discrete sets of electronics that include their own circuit(s) (e.g., integrated circuits, microprocessors, memory, storage, etc.) and firmware, sensors, actuators, and/or mounting hardware. The ECUs 1408 communicate and exchange information via a vehicle data bus (e.g., the vehicle data bus 1410). Additionally, the ECUs 1408 may communicate properties (e.g., status of the ECUs, sensor readings, control state, error, and diagnostic codes, etc.) and/or receive requests from each other. For example, the vehicle may have dozens of the ECUs that are positioned in various locations around the vehicle and are communicatively coupled with the vehicle data bus 1410.

In the illustrated example, the ECUs 1408 include the autonomy unit 1408-1 and a body control module 1408-2. For example, the autonomy unit 1408-1 is configured to perform autonomous and/or semi-autonomous driving maneuvers (e.g., defensive driving maneuvers) of the vehicle based upon, at least in part, instructions received from the controller 1412-1 and/or data collected by the sensors 1406 (e.g., range-detection sensors). Further, the body control module 1408-2 controls one or more subsystems throughout the vehicle, such as power windows, power locks, an immobilizer system, power mirrors, etc. For example, the body control module 1408-2 includes circuits that drive one or more relays (e.g., to control wiper fluid, etc.), brushed direct current (DC) motors (e.g., to control power seats, power locks, power windows, wipers, etc.), stepper motors, LEDs, safety systems (e.g., seatbelt pretensioner, airbags, etc.), etc.

The vehicle data bus 1410 communicatively couples the communication module 1420, the onboard computing platform 1402, the HMI unit 1404, the sensors 1406, and the ECUs 1408. In some examples, the vehicle data bus 1410 includes one or more data buses. The vehicle data bus 1410 may be implemented in accordance with a controller area network (CAN) bus protocol as defined by International Standards Organization (ISO) 11898-1, a Media Oriented Systems Transport (MOST) bus protocol, a CAN flexible data (CAN-FD) bus protocol (ISO 11898-7) and/a K-line bus protocol (ISO 9141 and ISO 14230-1), and/or an Ethernet^{™} bus protocol IEEE 802.3 (2002 onwards), etc.

The communication module for nearby devices 1420-1 is configured to communicate with other nearby communication devices. In the illustrated example, the communication module 1420 includes a dedicated short-range communication (DSRC) module. A DSRC module includes antenna(s), radio(s) and software to communicate with nearby vehicle(s) via vehicle-to-vehicle (V2V) communication, infrastructure-based module(s) via vehicle-to-infrastructure (V2I) communication, and/or, more generally, nearby communication device(s) (e.g., a mobile device-based module) via vehicle-to-everything (V2X) communication.

V2V communication allows vehicles to share information such as speed, position, direction, and other relevant data, enabling them to cooperate and coordinate their actions to improve safety, efficiency, and mobility on the road. V2V communication can be used to support a variety of applications, such as collision avoidance, lane change assistance, platooning, and traffic management. It may rely on dedicated short-range communication (DSRC) and other wireless protocols that enable fast and reliable data transmission between vehicles. V2V communication, which is a form of wireless communication between vehicles that allows vehicles to exchange information and coordinate with other vehicles on the road. V2V communication enables vehicles to share data about their location, speed, direction, acceleration, and braking with other nearby vehicles, which can help improve safety, reduce congestion, and enhance the efficiency of transportation systems.

V2V communication is typically based on wireless communication protocols such as Dedicated Short-Range Communications (DSRC) or Cellular Vehicle-to-Everything (C-V2X) technology. With V2V communication, vehicles can receive information about potential hazards, such as accidents or road closures, and adjust their behavior accordingly. V2V communication can also be used to support advanced driver assistance systems (ADAS) and automated driving technologies, such as platooning, where a group of vehicles travel closely together using V2V communication to coordinate their movements.

More information on the DSRC network and how the network may communicate with vehicle hardware and software is available in the U.S. Department of Transportation's Core June 2011 System Requirements Specification (SyRS) report (available at http://wwwits.dot.gov/meetings/pdf/CoreSystemSESyRSRev A%20(2011-06-13).pdf). DSRC systems may be installed on vehicles and along roadsides on infrastructure. The DSRC system incorporating infrastructure information is known as a "roadside" system. DSRC may be combined with other technologies, such as Global Position System (GPS), Visual Light Communications (VLC), Cellular Communications, and short range radar, facilitating the vehicles communicating their position, speed, heading, relative position to other objects and to exchange information with other vehicles or external computer systems. DSRC systems can be integrated with other systems such as mobile phones.

Currently, the DSRC network is identified under the DSRC abbreviation or name. However, other names are sometimes used, usually related to a Connected Vehicle program or the like. Most of these systems are either pure DSRC or a variation of the IEEE 802.11 wireless standard. However, besides the pure DSRC system it is also meant to cover dedicated wireless communication systems between cars and roadside infrastructure systems, which are integrated with GPS and are based on an IEEE 802.11 protocol for wireless local area networks (such as 802.11p, etc.).

Additionally, or alternatively, the communication module for external networks 1420-2 includes a cellular vehicle-to-everything (C-V2X) module. A C-V2X module includes hardware and software to communicate with other vehicle(s) via V2V communication, infrastructure-based module(s) via V2I communication, and/or, more generally, nearby communication devices (e.g., mobile device-based modules) via V2X communication. For example, a C-V2X module is configured to communicate with nearby devices (e.g., vehicles, roadside units, mobile devices, etc.) directly and/or via cellular networks. Currently, standards related to C-V2X communication are being developed by the 3rd Generation Partnership Project.

Further, the communication module for external networks 1420-2 is configured to communicate with external networks. For example, the communication module for external networks 1420-2 includes hardware (e.g., processors, memory, storage, antenna, etc.) and software to control wired or wireless network interfaces. In the illustrated example, the communication module for external networks 1420-2 includes one or more communication controllers for cellular networks (e.g., Global System for Mobile Communications (GSM), Universal Mobile Telecommunications System (UMTS), Long Term Evolution (LTE), Code Division Multiple Access (CDMA)), Near Field Communication (NFC) and/or other standards-based networks (e.g., WiMAX (IEEE 802.16m), local area wireless network (including IEEE 802.11 a/b/g/n/ac or others), Wireless Gigabit (IEEE 802.11ad), etc.). In some examples, the communication module for external networks 1420-2 includes a wired or wireless interface (e.g., an auxiliary port, a Universal Serial Bus (USB) port, a Bluetooth^{®} wireless node, etc.) to communicatively couple with a mobile device (e.g., a smart phone, a wearable, a smart watch, a tablet, etc.). In such examples, the vehicle may communicate with the external network via the coupled mobile device. The external network(s) may be a public network such as the Internet, a private network such as an intranet, or combinations thereof, and may utilize a variety of networking protocols now available or later developed including, but not limited to, TCP/IP-based networking protocols.

In an embodiment, the communication module 1420 is enabled for an autonomous communication, wherein the autonomous communication comprises communication over a period with minimal supervision under different scenarios. The communication module comprises a hardware component comprising a vehicle gateway system comprising a microcontroller, a transceiver, a power management integrated circuit, an Internet of Things device capable of transmitting one of an analog and a digital signal over one of a telephone, a communication, either wired or wirelessly.

The autonomy unit 1408-1 of the illustrated example is configured to perform autonomous and/or semi-autonomous driving maneuvers, such as defensive driving maneuvers, for the vehicle. For example, the autonomy unit 1408-1 performs the autonomous and/or semi-autonomous driving maneuvers based on data collected by the sensors 1406. In some examples, the autonomy unit 1408-1 is configured to operate a fully autonomous system, a park-assist system, an advanced driver-assistance system (ADAS), and/or other autonomous system(s) for the vehicle.

An ADAS is configured to assist a driver in safely operating the vehicle. For example, the ADAS is configured to perform adaptive cruise control, collision avoidance, lane-assist (e.g., lane centering), blind-spot detection, rear-collision warning(s), lane departure warnings and/or any other function(s) that assist the driver in operating the vehicle. To perform the driver-assistance features, the ADAS monitors objects (e.g., vehicles, pedestrians, traffic signals, etc.) and develops situational awareness around the vehicle. For example, the ADAS utilizes data collected by the sensors 1406, the communication module 1420-1 (e.g., from other vehicles, from roadside units, etc.), the communication module 1420-2 from a remote server, and/or other sources to monitor the nearby objects and develop situational awareness.

Further, in the illustrated example, the controller 1412-1 is configured to monitor an ambient environment of the vehicle. For example, to enable the autonomy unit 1408-1 to perform autonomous and/or semi-autonomous driving maneuvers, the controller 1412-1 collects data that is collected by the sensors 1406 of the vehicle. In some examples, the controller 1412-1 collects location-based data via the communication module 420-1 and/or another module (e.g., a GPS receiver) to facilitate the autonomy unit 1408-1 in performing autonomous and/or semi-autonomous driving maneuvers. Additionally, the controller 1412-1 collects data from (i) adjacent vehicle(s) via the communication module 1420-1 and V2V communication and/or (ii) roadside unit(s) via the communication module 1420-1 and V2I communication to further facilitate the autonomy unit 1408-1 in performing autonomous and/or semi-autonomous driving maneuvers.

In operation, according to an embodiment, the communication module 1420-1 performs V2V communication with an adjacent vehicle. For example, the communication module 1420-1 collects data from the adjacent vehicle that identifies (i) whether the adjacent vehicle includes an autonomous and/or semi-autonomous system (e.g., ADAS), (ii) whether the autonomous and/or semi-autonomous system is active, (iii) whether a manual takeover request of the autonomous and/or semi-autonomous system has been issued, (iv) lane-detection information of the adjacent vehicle, (v) a speed and/or acceleration of the adjacent vehicle, (vi) a (relative) position of the adjacent vehicle, (vii) a direction-of-travel of the adjacent vehicle, (viii) a steering angle rate-of-change of the adjacent vehicle, (ix) dimensions of the adjacent vehicle, (x) whether the adjacent vehicle is utilizing stability control system(s) (e.g., anti-lock braking, traction control, electronic stability control, etc.), and/or any other information that facilitates the controller 1412-1 in monitoring the adjacent vehicle.

Based at least partially on the data that the communication module 1420-1 collects from the adjacent vehicle via V2V communication, the controller 1412-1 can determine a collision probability for the adjacent vehicle. For example, the controller 1412-1 determines a collision probability for the adjacent vehicle in response to identifying a manual takeover request within the data collected by the communication module 1420-1 from the adjacent vehicle. Additionally, or alternatively, the controller 1412-1 determines a collision probability for the adjacent vehicle in response to identifying a discrepancy between (i) lane-marker locations determined by the controller 1412-1 of the vehicle based on the sensors 1406 and (ii) lane-marker location determined by the adjacent vehicle. Further, in some examples, the controller 1412-1 determines the collision probability for the adjacent vehicle based on data collected from other sources, such as the sensors 1406, e.g., range detector sensors and/or other sensor(s) of the vehicle, roadside unit(s) in communication with the communication module 1420-1 via V2I communication, and/or remote server(s) in communication with the communication module 1420-1. For example, the controller 1412-1 determines the collision probability for the adjacent vehicle upon determining, based on data collected by the sensors of the vehicle and the adjacent vehicle, that the adjacent vehicle has not detected a nearby object.

In some examples, the controller 1412-1 determines the collision probability based on a takeover time for the adjacent vehicle and/or a time-to-collision of the adjacent vehicle. For example, the takeover time corresponds with a duration of time between (i) the adjacent vehicle emitting a request for a manual takeover to be performed and (ii) an operator of the adj acent vehicle manually taking over control of the adjacent vehicle. The controller 1412-1 is configured to determine the takeover time of the adjacent vehicle based on measured characteristics of the adjacent vehicle (e.g., velocity, acceleration, dimensions, etc.), the operator of the adjacent vehicle (e.g., a measured reaction time, etc.), and/or an environment of the adjacent vehicle (e.g., road conditions, weather conditions, etc.). Further, the time-to-collision corresponds with the time it would take for the adjacent vehicle to collide with another vehicle (e.g., a third vehicle) and/or object (e.g., a guardrail, a highway lane divider, etc.) if the current conditions were maintained.

Additionally, or alternatively, the controller 1412-1 is configured to determine the time-to-collision of the adjacent vehicle based on a velocity, an acceleration, a direction-of-travel, a distance to the object, a required steering angle to avoid the object, a steering angle rate-of-change, and/or other measured characteristics of the adj acent vehicle that the communication module 1420-1 collects from the adjacent vehicle via V2V communication. Further, the controller 1412-1 is configured to determine a collision probability for the vehicle based on the collision probability of the adjacent vehicle.

Upon determining the collision probability of the adjacent vehicle and determining that the collision is probable, the autonomy unit 408-1 autonomously performs (e.g., for the ADAS) a defensive driving maneuver to prevent the vehicle from being involved in a collision caused by the adjacent vehicle. For example, the autonomous defensive driving maneuver includes deceleration, emergency braking, changing of lanes, changing of position within a current lane of travel, etc. In some examples, the autonomy unit 1408-1 is configured to initiate the defensive driving maneuver before the takeover time of the adjacent vehicle has been completed. That is, the controller 1412-1 is configured to cause the autonomy unit 1408-1 to perform the defensive driving maneuver before the operator of the adjacent vehicle manually takes over control of the adjacent vehicle. Further, in some examples, the controller 1412-1 emits an audio, visual, haptic, and/or other alert (e.g., via an HMI unit 1404) for the operator of the vehicle to request manual takeover in response to determining that the collision probability is less than the first threshold and greater than the second threshold. By emitting such an alert, the controller 1412-1 enables the operator of the vehicle to safely take control of the vehicle before the adjacent vehicle is potentially involved in a collision. Additionally, or alternatively, the controller 1412-1 is configured to perform other defensive measures (e.g., prefilling brake fluid lines) in response to determining that the collision probability is greater than a threshold (e.g., the second threshold, a third threshold).

The communication module enables in-vehicle communication, communication with other vehicles, infrastructure communication, grid communication, etc., using Vehicle to network (V2N), Vehicle to infrastructure (V2I), Vehicle to vehicle (V2V), Vehicle to cloud (V2C), Vehicle to pedestrian (V2P), Vehicle to device (V2D), Vehicle to grid (V2G) communication systems. For example, if there is a congestion, for some reason, during a trip in a vehicle or car, first, the system detects that there is a traffic jam. Then, the system notifies nearby or surrounding vehicles or vehicles communicating with the vehicle's communication module. The vehicle uses, for example, a message protocol, a message that goes to the other vehicles via a broadcast.

In an embodiment, a connection is established between a vehicle and a nearby vehicle, which is a surrounding car. A nearby vehicle is detected by the control module. The nearby vehicle is detected by exchanging handshaking signals. The handshaking is the automated process for negotiation of setting up a communication channel between entities. The processor sends a start signal through the communication channel in order to detect a nearby vehicle. If there is a nearby vehicle, the processor may receive an acknowledgement signal from the nearby vehicle. Upon receiving the acknowledgement signal, the processor establishes a secured connection with the nearby vehicle. The processor may receive a signal at the communication module from the nearby vehicle. The processor may further automatically determine the origin of the signal. The processor communicatively connects the communication module to the nearby vehicle. Then the processor is configured to send and/or receive a message to and/or from the nearby vehicle. The signals received by the communication module may be analyzed to identify the origin of the signal to determine a location of the nearby vehicle.

In an embodiment, the system is enabled for bidirectional communication. The system sends a signal and then receives a signal/communication. In an embodiment, the communication could be a permission for access to control the other vehicle. In another embodiment, the communication could be an incremental control communication, for example, an initial control of the speed up to 10 miles per hour, then further additional 10 miles per hour, and so on.

As a first step of the method according to the disclosure, a data link between the vehicle and nearby vehicle or any other external device is set up in order to permit data to be exchanged between the vehicle and the nearby vehicle or any other external device in the form of a bidirectional communication. This can take place, for example, via a radio link or a data cable. It is therefore possible for the nearby vehicle or any other external device to receive data from the vehicle or for the vehicle to request data from the nearby vehicle or any other external device.

In an embodiment, bidirectional communication comprises the means for data acquisition and are designed to exchange data bidirectionally with one another. In addition, at least the vehicle comprises the logical means for gathering the data and arranging it to a certain protocol based on the receiving entity's protocol.

Initially, a data link for bidirectional communication is set up. The vehicle and the nearby vehicle or any other external device can communicate with one another via this data link and therefore request or exchange data, wherein the data link can be implemented, for example, as a cable link or radio link.

Bidirectional communication has various advantages as described herein. In various embodiments, data is communicated and transferred at a suitable interval, including, for example, 200 millisecond (ms) intervals, 100 ms intervals, 50 ms intervals, 20 ms intervals, 10 ms intervals, or even more frequent and/or in real-time or near real-time, in order to allow a vehicle to respond to, or otherwise react to, data. Bidirectional IR communication may be used to facilitate the data exchange.

The apparatus for the vehicle according to the embodiment that performs bidirectional communication may be by means of a personal area network (PAN) modem. Therefore, a user can have access to an external device using the vehicle information terminal, and can then store, move, and delete the user's desired data.

In an embodiment, the vehicle can transmit a message, a communication. It can be using any combination of vehicle to vehicle (V2V), vehicle to everything (V2X) or vehicle to infrastructure (V2I) type of communication. In an embodiment, it uses vehicle-to-vehicle (V2V) communication that enables vehicles to wirelessly exchange information (communicate), for example, about their speed, location, and heading.

In an embodiment, messaging protocols comprise of at least one of Advanced Message Queuing Protocol (AMQP), Message Queuing Telemetry Transport (MQTT), Simple (or Streaming) Text Oriented Message Protocol (STOMP), MQTT-S (is an extension of the open publish/subscribe MQTT), which are heavily used in IoT based technologies and edge networks.

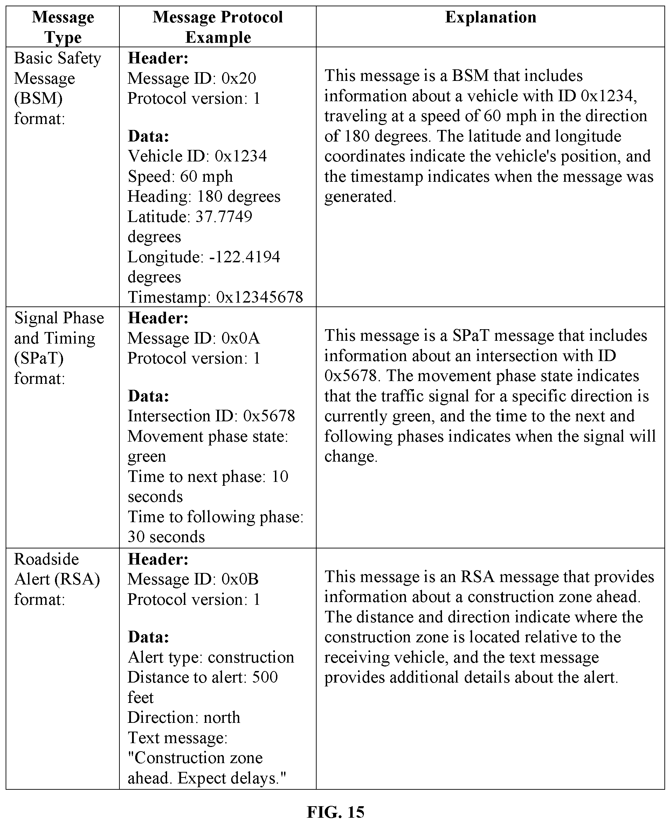

FIG. 15 shows example messages in Dedicated Short-Range Communications (DSRC) message format. FIG. 15 shows: (i) Basic Safety Message (BSM) format: BSM is a fundamental message type in DSRC, used for transmitting information about a vehicle's status, location, and movement to other vehicles in the area. In the example message, the header contains the message ID and protocol version, while the data section contains specific information about the vehicle, such as its ID, speed, heading, and position. The timestamp indicates when the message was generated and can be used by other vehicles to determine the current status of the transmitting vehicle; (ii) Signal Phase and Timing (SPaT) format: The SPaT message provides information about the current state of traffic signals at an intersection, including which phase is currently active and when the signal will change. This information can be used by vehicles to optimize their driving behavior and avoid collisions. In the example message, the header contains the message ID and protocol version, while the data section includes the ID of the intersection, the state of the movement phase, and the time remaining until the next and following phases; (iii) Roadside Alert (RSA) format: The RSA message is used to notify vehicles about hazards or other important information on the road ahead, such as construction zones, accidents, or detours. In the example message, the header contains the message ID and protocol version, while the data section includes the type of alert (construction), the distance to the alert, the direction of the alert, and a text message providing additional details about the alert.

According to an embodiment, there are other possible elements that can be included in each message format, for example, the BSM format may also include information on: acceleration, size and weight, vehicle safety extensions including Brakes, Lights, Wipers, Transmission and powertrain, Vehicle dimensions and Vehicle identification information including identification number and vehicle type.

There are several other message formats available in DSRC protocol besides the three examples provided earlier. Some of these message formats include: MAP (Message Assistance for Path Provisioning) format: This message provides a map of the road network, including information about the road layout, speed limits, and other relevant details; CAM (Cooperative Awareness Message) format: Similar to the BSM message format, this message provides information about a vehicle's current status, such as speed, position, and heading. CAM messages are typically sent at a higher frequency than BSM messages to support more accurate situational awareness; DENM (Decentralized Environmental Notification Message) format: This message provides information about environmental conditions that may affect driving, such as weather conditions, visibility, and road surface conditions; EV (Emergency Vehicle) format: This message provides information about emergency vehicles, such as their location and direction of travel, to help other drivers safely navigate around them; TCI (Traffic Control Information) format: This message provides information about traffic conditions, such as congestion, accidents, and construction zones, to help drivers make informed decisions about their routes.

Overall, the various message formats available in DSRC protocol support a wide range of use cases, from basic vehicle-to-vehicle communication to more complex applications such as real-time traffic management and emergency response.

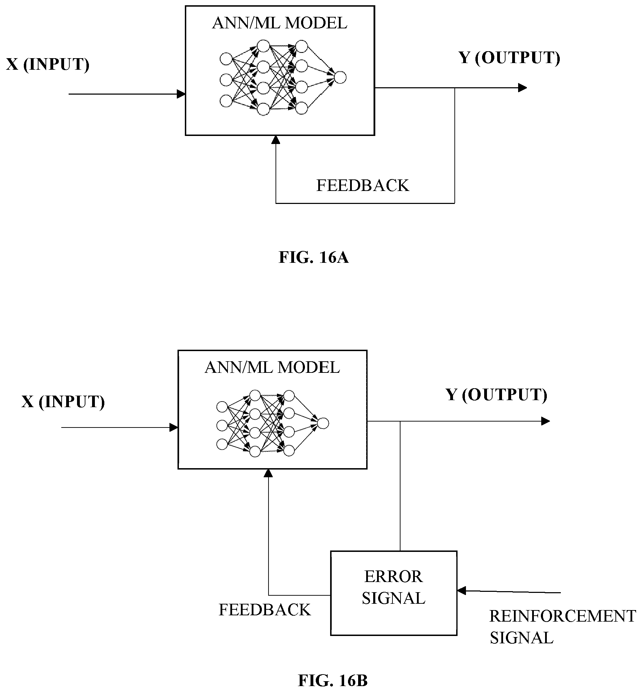

FIG. 16A shows a structure of the neural network / machine learning model with a feedback loop. Artificial neural networks (ANNs) model comprises an input layer, one or more hidden layers, and an output layer. Each node, or artificial neuron, connects to another and has an associated weight and threshold. If the output of any individual node is above the specified threshold value, that node is activated, sending data to the next layer of the network. Otherwise, no data is passed to the next layer of the network. A machine learning model or an ANN model may be trained on a set of data to take a request in the form of input data, make a prediction on that input data, and then provide a response. The model may learn from the data. Learning can be supervised learning and/or unsupervised learning and may be based on different scenarios and with different datasets. Supervised learning comprises logic using at least one of a decision tree, logistic regression, and support vector machines. Unsupervised learning comprises logic using at least one of a k-means clustering, a hierarchical clustering, a hidden Markov model, and an apriori algorithm. The output layer may predict or detect a traffic condition, the probability of the vehicle crossing the intersection area, the probability of detecting the trailing vehicle crossing the intersection area based on the input data.

In an embodiment, ANNs may be a Deep-Neural Network (DNN), which is a multilayer tandem neural network comprising Artificial Neural Networks (ANN), Convolution Neural Networks (CNN) and Recurrent Neural Networks (RNN) that can recognize features from inputs, do an expert review, and perform actions that require predictions, creative thinking, and analytics. In an embodiment, ANNs may be Recurrent Neural Network (RNN), which is a type of Artificial Neural Networks (ANN), which uses sequential data or time series data. Deep learning algorithms are commonly used for ordinal or temporal problems, such as language translation, Natural Language Processing (NLP), speech recognition, and image recognition, etc. Like feedforward and convolutional neural networks (CNNs), recurrent neural networks utilize training data to learn. They are distinguished by their "memory" as they take information from prior input via a feedback loop to influence the current input and output. An output from the output layer in a neural network model is fed back to the model through the feedback. The variations of weights in the hidden layer(s) will be adjusted to fit the expected outputs better while training the model. This will allow the model to provide results with far fewer mistakes.

The neural network is featured with the feedback loop to adjust the system output dynamically as it learns from the new data. In machine learning, backpropagation and feedback loops are used to train an AI model and continuously improve it upon usage. As the incoming data that the model receives increases, there are more opportunities for the model to learn from the data. The feedback loops, or backpropagation algorithms, identify inconsistencies and feed the corrected information back into the model as an input.

Even though the AI/ML model is trained well, with large sets of labelled data and concepts, after a while, the models' performance may decline while adding new, unlabelled input due to many reasons which include, but not limited to, concept drift, recall precision degradation due to drifting away from true positives, and data drift over time. A feedback loop to the model keeps the AI results accurate and ensures that the model maintains its performance and improvement, even when new unlabelled data is assimilated. A feedback loop refers to the process by which an AI model's predicted output is reused to train new versions of the model.

Initially, when the AI/ML model is trained, a few labelled samples comprising both positive and negative examples of the concepts (for e.g., probability of crossing the intersection area) are used that are meant for the model to learn. Afterward, the model is tested using unlabelled data. By using, for example, deep learning and neural networks, the model can then make predictions on whether the desired concept/s (for e.g., probability of crossing the intersection area) are in unlabelled images. Each image is given a probability score where higher scores represent a higher level of confidence in the models' predictions. Where a model gives an image a high probability score, it is auto labelled with the predicted concept. However, in the cases where the model returns a low probability score, this input may be sent to a controller (may be a human moderator) which verifies and, as necessary, corrects the result. The human moderator may be used only in exceptional cases. The feedback loop feeds labelled data, auto-labelled or controller-verified, back to the model dynamically and is used as training data so that the system can improve its predictions in real-time and dynamically.

FIG. 16B shows a structure of the neural network / machine learning model with reinforcement learning. The network receives feedback from authorized networked environments. Though the system is similar to supervised learning, the feedback obtained in this case is evaluative not instructive, which means there is no teacher as in supervised learning. After receiving the feedback, the network performs adjustments of the weights to get better predictions in the future. Machine learning techniques, like deep learning, allow models to take labeled training data and learn to recognize those concepts in subsequent data and images. The model may be fed with new data for testing, hence by feeding the model with data it has already predicted over, the training gets reinforced. If the machine learning model has a feedback loop, the learning is further reinforced for each true positive of the output of the system. Feedback loops ensure that AI results do not stagnate. By incorporating a feedback loop, the model output keeps improving dynamically and over usage/time.

In an embodiment, the system may comprise a cyber security module.

In one aspect, a secure communication management (SCM) computer device for providing secure data connections is provided. The SCM computer device includes a processor 1708 in communication with memory. The processor 1708 is programmed to receive, from a first device, a first data message. The first data message is in a standardized data format. The processor 1708 is also programmed to analyze the first data message for potential cyber security threats. If the determination is that the first data message does not contain a cyber security threat, the processor 1708 is further programmed to convert the first data message into a first data format associated with the vehicle environment and transmit the converted first data message to the communication module using a first communication protocol associated with the negotiated protocol.

According to an embodiment, secure authentication for data transmissions comprises, provisioning a hardware-based security engine (HSE) located in the cyber security module, said HSE having been manufactured in a secure environment and certified in said secure environment as part of an approved network; performing asynchronous authentication, validation and encryption of data using said HSE, storing user permissions data and connection status data in an access control list used to define allowable data communications paths of said approved network, enabling communications of the cyber security module with other computing system subjects (e.g., communication module) to said access control list, performing asynchronous validation and encryption of data using security engine including identifying a user device (UD) that incorporates credentials embodied in hardware using a hardware-based module provisioned with one or more security aspects for securing the communication, wherein security aspects comprising said hardware-based module communicating with a user of said user device and said HSE.

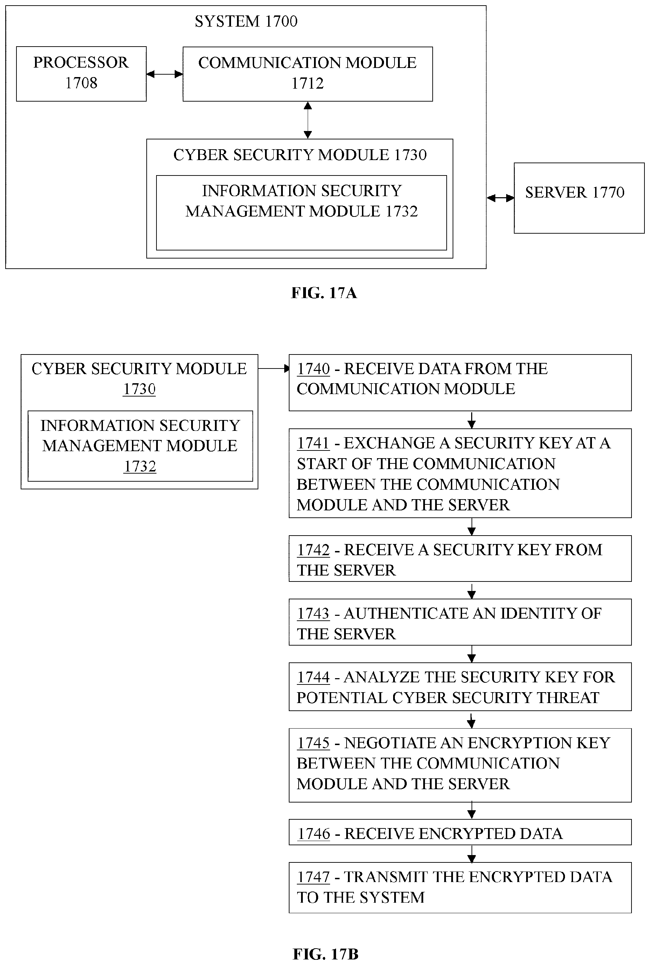

In an embodiment, FIG. 17A shows the block diagram of the cyber security module. The communication of data between the system 1700 and the server 1770 through the communication module 1712 is first verified by the information security management module 1732 before being transmitted from the system to the server or from the server to the system. The information security management module is operable to analyze the data for potential cyber security threats, to encrypt the data when no cyber security threat is detected, and to transmit the data encrypted to the system or the server.

In an embodiment, the cyber security module further comprises an information security management module providing isolation between the system and the server. FIG. 17B shows the flowchart of securing the data through the cyber security module 1730. At step 1740, the information security management module is operable to receive data from the communication module. At step 1741, the information security management module exchanges a security key at a start of the communication between the communication module and the server. At step 1742, the information security management module receives a security key from the server. At step 1743, the information security management module authenticates an identity of the server by verifying the security key. At step 1744, the information security management module analyzes the security key for potential cyber security threats. At step 1745, the information security management module negotiates an encryption key between the communication module and the server. At step 1746, the information security management module receives the encrypted data. At step 1747, the information security management module transmits the encrypted data to the server when no cyber security threat is detected.

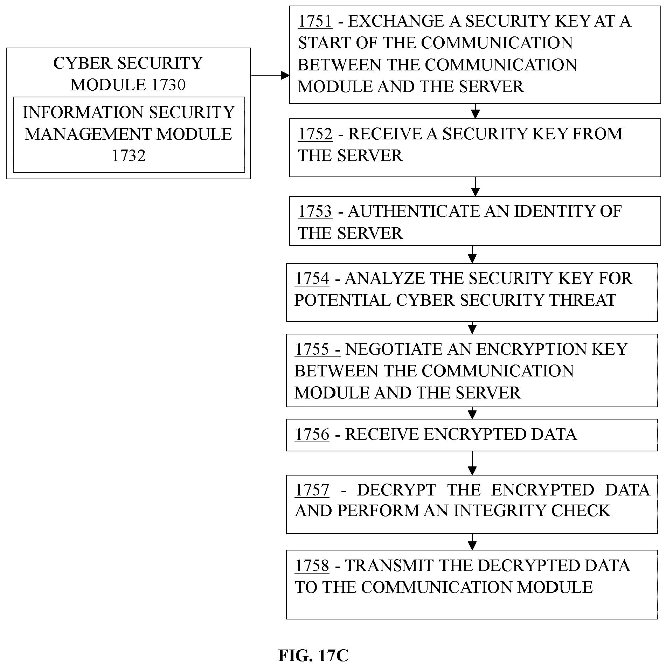

In an embodiment, FIG. 17C shows the flowchart of securing the data through the cyber security module 1730. At step 1751, the information security management module is operable to: exchange a security key at a start of the communication between the communication module and the server. At step 1752, the information security management module receives a security key from the server. At step 1753, the information security management module authenticates an identity of the server by verifying the security key. At step 1754, the information security management module analyzes the security key for potential cyber security threats. At step 1755, the information security management module negotiates an encryption key between the communication module and the server. At step 1756, the information security management module receives encrypted data. At step 1757, the information security management module decrypts the encrypted data, and performs an integrity check of the decrypted data. At step 1758, the information security management module transmits the decrypted data to the communication module when no cyber security threat is detected.

In an embodiment, the integrity check is a hash-signature verification using a Secure Hash Algorithm 256 (SHA256) or a similar method.

In an embodiment, the information security management module is configured to perform asynchronous authentication and validation of the communication between the communication module and the server.

In an embodiment, the information security management module is configured to raise an alarm if a cyber security threat is detected. In an embodiment, the information security management module is configured to discard the encrypted data received if the integrity check of the encrypted data fails.

In an embodiment, the information security management module is configured to check the integrity of the decrypted data by checking accuracy, consistency, and any possible data loss during the communication through the communication module.

In an embodiment, the server is physically isolated from the system through the information security management module. When the system communicates with the server as shown in FIG. 17A, identity authentication is first carried out on the system and the server. The system is responsible for communicating/exchanging a public key of the system and a signature of the public key with the server. The public key of the system and the signature of the public key are sent to the information security management module. The information security management module decrypts the signature and verifies whether the decrypted public key is consistent with the received original public key or not. If the decrypted public key is verified, the identity authentication is passed. Similarly, the system and the server carry out identity authentication on the information security management module. After the identity authentication is passed on to the information security management module, the two communication parties, the system, and the server, negotiate an encryption key and an integrity check key for data communication of the two communication parties through the authenticated asymmetric key. A session ID number is transmitted in the identity authentication process, so that the key needs to be bound with the session ID number; when the system sends data to the outside, the information security gateway receives the data through the communication module, performs integrity authentication on the data, then encrypts the data through a negotiated secret key, and finally transmits the data to the server through the communication module. When the information security management module receives data through the communication module, the data is decrypted first, integrity verification is carried out on the data after decryption, and if verification is passed, the data is sent out through the communication module; otherwise, the data is discarded.

In an embodiment, the identity authentication is realized by adopting an asymmetric key with a signature.

In an embodiment, the signature is realized by a pair of asymmetric keys which are trusted by the information security management module and the system, wherein the private key is used for signing the identities of the two communication parties, and the public key is used for verifying that the identities of the two communication parties are signed. Signing identity comprises a public and a private key pair. In other words, signing identity is referred to as the common name of the certificates which are installed in the user's machine.

In an embodiment, both communication parties need to authenticate their own identities through a pair of asymmetric keys, and a task in charge of communication with the information security management module of the system is identified by a unique pair of asymmetric keys.

In an embodiment, the dynamic negotiation key is encrypted by adopting an Rivest-Shamir-Adleman (RSA) encryption algorithm. RSA is a public-key cryptosystem that is widely used for secure data transmission. The negotiated keys include a data encryption key and a data integrity check key.

In an embodiment, the data encryption method is a Triple Data Encryption Algorithm (3DES) encryption algorithm. The integrity check algorithm is a Hash-based Message Authentication Code (HMAC-MD5-128) algorithm. When data is output, the integrity check calculation is carried out on the data, the calculated Message Authentication Code (MAC) value is added with the header of the value data message, then the data (including the MAC of the header) is encrypted by using a 3DES algorithm, the header information of a security layer is added after the data is encrypted, and then the data is sent to the next layer for processing. In an embodiment the next layer refers to a transport layer in the Transmission Control Protocol / Internet Protocol (TCP/IP) model.

The information security management module ensures the safety, reliability, and confidentiality of the communication between the system and the server through the identity authentication when the communication between the two communication parties starts the data encryption and the data integrity authentication. The method is particularly suitable for an embedded platform which has less resources and is not connected with a Public Key Infrastructure (PKI) system and can ensure that the safety of the data on the server cannot be compromised by a hacker attack under the condition of the Internet by ensuring the safety and reliability of the communication between the system and the server.

The embodiments described herein include mere examples of systems and computer-implemented methods. It is, of course, not possible to describe every conceivable combination of components and/or computer-implemented methods for purposes of describing the one or more embodiments, but one of ordinary skill in the art can recognize that many further combinations and/or permutations of the one or more embodiments are possible. Furthermore, to the extent that the terms "includes, " "has, " "possesses, " and the like are used in the detailed description, claims, appendices and/or drawings such terms are intended to be inclusive in a manner similar to the term "comprising" as "comprising" is interpreted when employed as a transitional word in a claim.

Other specific forms may embody the present invention without departing from its spirit or characteristics. The described embodiments are in all respects illustrative and not restrictive. Therefore, the appended claims rather than the description herein indicate the scope of the invention. All variations which come within the meaning and range of equivalency of the claims are within their scope.

Various non-limiting aspects of various embodiments described herein are presented in the following clauses.
1. A method comprising:
   determining, by a control module, a traffic condition surrounding a vehicle in real-time;
   detecting, by the control module, a movement of the vehicle towards a traffic light and an intersection area;
   determining, by the control module, a time taken for a traffic light cycle;
   determining, by the control module, an average distance travelled by the vehicle during the traffic light cycle; and
   computing, by the control module through a computing engine, a probability of the vehicle crossing the intersection area prior to a red signal of the traffic light cycle, based on the average distance travelled by the vehicle, intersection area information, and a length of the vehicle, wherein the probability of the vehicle crossing the intersection area is set to true when computed that the vehicle crosses the intersection area prior to the red signal of the traffic light cycle; and wherein the probability of the vehicle crossing the intersection area is set to false when computed that the vehicle obstructs the intersection area.
2. The method of clause 1, wherein the probability of the vehicle crossing the intersection area computed is set to true further comprises:
   computing that the vehicle is a last vehicle to pass the intersection area prior to the red signal of the traffic light cycle and a trailing vehicle behind the vehicle obstructs the intersection area.
3. The method of clause 2, further comprising:
   communicating, by the control module, a first message to a nearby vehicle upon computing that the vehicle is the last vehicle to pass the intersection area prior to the red signal of the traffic light cycle.
4. The method of clause 3, wherein the first message delivers a command to the nearby vehicle before the traffic light provides a signal to the nearby vehicle.
5. The method of clause 4, wherein the command to the nearby vehicle enables continuous mobility and upgrades the traffic condition.
6. The method of clause 1, further comprising:
   providing a first command, by the control module, to an electric drive unit of the vehicle to pass the intersection area upon the probability of the vehicle crossing the intersection area is set to true.
7. The method of clause 1, further comprising:
   providing a second command, by the control module, to an electric drive unit of the vehicle to stop before the intersection area upon the probability of the vehicle crossing the intersection area is set to false.
8. The method of clause 6, wherein the first command comprises details of speed, direction, a lane, a first distance between the vehicle and a leading vehicle, a second distance between the vehicle and a trailing vehicle, and lane change information.
9. The method of clause 7, wherein the second command comprises details of a lane, a first distance between the vehicle and the intersection area, a second distance between the vehicle and a trailing vehicle, and lane change information.
10. The method of clause 1, wherein determining the traffic condition surrounding the vehicle in real-time comprises:
   monitoring a speed of the vehicle through a sensor;
   comparing the speed of the vehicle and a threshold speed; and
   determining the traffic condition surrounding the vehicle in real-time when the speed of the vehicle is less than the threshold speed.
11. The method of clause 1, wherein determining the traffic condition surrounding the vehicle in real-time comprises:
   capturing an image around the vehicle for a threshold space;
   performing an image processing of the image, wherein the image processing comprises an object detection;
   determining number of vehicles around the vehicle from the image; and
   determining the traffic condition surrounding the vehicle in real-time when the number of vehicles is greater than a threshold number of vehicles.
12. The method of clause 1, wherein determining the traffic condition surrounding the vehicle in real-time comprises:
   monitoring a speed of a nearby vehicle through a sensor;
   comparing the speed of the nearby vehicle and a threshold speed; and
   determining the traffic condition surrounding the vehicle in real-time when the speed of the vehicle is less than the threshold speed.
13. The method of clause 1, wherein determining the traffic condition surrounding the vehicle in real-time comprises:
   obtaining the traffic condition surrounding the vehicle in real-time from a third party service.
14. The method of clause 1, wherein determining the traffic condition surrounding the vehicle in real-time comprises:
   retrieving a prestored traffic condition from a traffic information database based on one of a current time, and a real-time location of the vehicle;
   determining through the computing engine whether the current time is one of a peak hour, and a working hour; and
   dynamically updating the prestored traffic condition through the computing engine based on the determination of whether the current time is one of the peak hour, and the working hour.
15. The method of clause 1, wherein determining the traffic condition surrounding the vehicle comprises:
   computing the traffic condition using statistical data analysis of history of prestored traffic condition from a traffic information database.
16. The method of clause 1, wherein detecting, by the control module, the movement of the vehicle towards the traffic light and the intersection area comprises:
   detecting the movement of the vehicle towards the traffic light and the intersection area using video analytics through the computing engine.
17. The method of clause 1, wherein detecting, by the control module, the movement of the vehicle towards the traffic light and the intersection area comprises:
   detecting the movement of the vehicle towards the traffic light and the intersection area by performing video analytics of a real-time video through the computing engine.
18. The method of clause 1, wherein detecting, by the control module, the movement of the vehicle towards the traffic light and the intersection area comprises:
   performing an image processing of an image through the computing engine;
   scanning the image and recognizing one of the traffic light, the intersection area, the red signal, a green signal, and a yellow signal from the image; and
   detecting the movement of the vehicle towards the traffic light and the intersection area based on the scanning and recognizing,
      wherein the image comprises a region of interest around the vehicle covering the traffic light and the intersection area; and
      wherein the image comprises the vehicle and a nearby vehicle.
19. The method of clause 1, wherein determining the time taken for the traffic light cycle comprises:
   retrieving the time taken for the traffic light cycle from a traffic information database based on a current time, and a real-time location of the vehicle.
20. The method of clause 1, wherein determining the time taken for the traffic light cycle comprises:
   performing a video analytics of a video through the computing engine;
   scanning the video and detecting an interval between a green signal and the red signal of the traffic light and vice-versa; and
   determining the time taken for the traffic light cycle based on the interval,
      wherein the video comprises a sequence of frames of a region of interest around the vehicle for a predefined period of time; and
      wherein the video comprises the sequence of frames comprising the vehicle and the traffic light.
21. The method of clause 1, wherein the traffic light cycle comprises an indication of a green signal, a yellow signal, and the red signal.
22. The method of clause 1, wherein determining, by the control module, the average distance travelled by the vehicle during the traffic light cycle comprises:
   determining a first length moved by the vehicle during a first traffic light cycle;
   determining a second length moved by the vehicle during a second traffic light cycle;
   determining a third length moved by the vehicle during a third traffic light cycle; and
   calculating the average distance travelled by the vehicle during the traffic light cycle based on the first length, the second length, and the third length.
23. The method of clause 1, wherein computing, by the control module through the computing engine, the probability of the vehicle crossing the intersection area prior to the red signal of the traffic light cycle, based on the average distance travelled by the vehicle, the intersection area information, and the length of the vehicle comprises:
   obtaining the intersection area information from one of a traffic information database, and a third party service;
   recognizing a current signal of the traffic light cycle in real-time; and
   assessing the probability of the vehicle crossing the intersection area prior to the red signal of the traffic light cycle based on the average distance travelled by the vehicle during the traffic light cycle, the intersection area information, the current signal of the traffic light cycle, and the length of the vehicle.
24. The method of clause 1, wherein computing, by the control module through the computing engine, the probability of the vehicle crossing the intersection area prior to the red signal of the traffic light cycle, based on the average distance travelled by the vehicle, the intersection area information, and the length of the vehicle comprises:
   obtaining the intersection area information, a pedestrian crossing length, and a bike box length from one of a traffic information database, and a third party service;
   recognizing a current signal of the traffic light cycle in real-time; and
   assessing the probability of the vehicle crossing the intersection area prior to the red signal of the traffic light cycle based on the average distance travelled by the vehicle during the traffic light cycle, the intersection area information, the current signal of the traffic light cycle, the pedestrian crossing length, the bike box length, and the length of the vehicle.
25. The method of clause 2, wherein computing that the vehicle is the last vehicle to pass the intersection area prior to the red signal of the traffic light cycle further comprises:
   communicating a notification to the trailing vehicle from the vehicle, wherein the notification comprises a message indicating a countdown timer for the traffic light to switch to the red signal.
26. The method of clause 2, wherein computing that the vehicle is the last vehicle to pass the intersection area prior to the red signal of the traffic light cycle further comprises:
   communicating a notification to a leading vehicle from the vehicle, wherein the notification comprises a message indicating a maneuvering guidance to the leading vehicle to upgrade the traffic condition around the intersection area.
27. The method of clause 6, further comprising:
   maneuvering the vehicle, by the electric drive unit, to cross the intersection area prior to the red signal of the traffic light based on the first command.
28. The method of clause 27, further comprising:
   capturing a video, ahead of the vehicle, of a region of interest covering the vehicle and the intersection area in real-time;
   recognizing an end point of the intersection area from the video in real-time; and
   determining that the vehicle passed the intersection area when the end point of the intersection area passed from the video of the region of interest.
29. The method of clause 28, further comprising:
   measuring a distance driven by the vehicle ahead of the end point of the intersection area;
   comparing the length of the vehicle and the distance driven by the vehicle; and
   determining that the vehicle passed the intersection area when the distance driven by the vehicle is greater than the length of the vehicle.
30. The method of clause 28, further comprising:
   measuring a distance driven by the vehicle ahead of the end point of the intersection area;
   comparing the length of the vehicle and the distance driven by the vehicle; and
   determining that the vehicle is obstructing the intersection area when the distance driven by the vehicle is lesser than the length of the vehicle.
31. The method of clause 30, further comprising:
   upon determining that the vehicle is obstructing the intersection area, measuring a distance between the vehicle and a leading vehicle in a lane of the vehicle and an adjacent lane of the vehicle;
   comparing the distance and the length of the vehicle; and
   communicating a third command to the electric drive unit to one of move ahead to a predefined distance in the lane, and perform a lane change, when the distance measured is x times greater than the length of the vehicle.
32. The method of clause 2, further comprising:
   obtaining a distance driven by the vehicle after crossing the intersection area;
   detecting whether there is the trailing vehicle behind the vehicle;
   detecting that the trailing vehicle is in the intersection area;
   obtaining a model and a length of the trailing vehicle; and
   determining an extent of the intersection area that the trailing vehicle is obstructing the intersection area based on the distance driven by the vehicle after crossing the intersection area, the length of the trailing vehicle, the length of the vehicle and a distance between the vehicle and the trailing vehicle.
33. The method of clause 32, wherein determining the extent of the intersection area that the trailing vehicle is obstructing the intersection area further comprises:
   communicating one of a first signal and a first notification to a leading vehicle to move ahead when the trailing vehicle is obstructing the intersection area;
   monitoring a movement of the leading vehicle;
   maneuvering the vehicle, by an electric drive unit, in response to the movement of the leading vehicle; and
   communicating one of a second signal and a second notification to the trailing vehicle to move ahead to a predefined position to minimize the obstruction of the intersection area.
34. The method of clause 1, wherein determining, by the control module, the traffic condition surrounding the vehicle in real-time comprises one of:
   receiving a real-time traffic data from a source;
   determining at least one of a speed, a distance, and a direction of a nearby vehicle in a route;
   detecting a count of nearby vehicles and corresponding directions, surrounding the vehicle, using a video analytics unit;
   determining, that the nearby vehicle is having difficulty in navigation; and
   receiving the traffic condition from the nearby vehicle.
35. The method of clause 34, wherein the source comprises at least one of a closed-circuit television (CCTV) system, a third party service, a traffic flow sensor, a toll-payment device, mobile phone data, and connected car data.
36. The method of clause 3, wherein the first message comprises a maneuvering guidance to the nearby vehicle.
37. The method of clause 25, wherein a communication between the vehicle, a leading vehicle, and the trailing vehicle is via a Vehicle-to-Vehicle (V2V) communication.
38. The method of clause 25, wherein the vehicle comprises one of an autonomous vehicle, a semi-autonomous vehicle, and a manual-driven vehicle.
39. The method of clause 37, wherein the V2V communication is based on a wireless communication protocol using at least one of a Dedicated Short-Range Communications (DSRC), and a Cellular Vehicle-to-Everything (C-V2X) technology.
40. The method of clause 25, wherein a communication between the vehicle, a leading vehicle, and the trailing vehicle is via an internet connection.
41. The method of clause 25, wherein the computing engine comprises an artificial intelligence engine.
42. The method of clause 41, wherein the artificial intelligence engine comprises a machine learning algorithm.
43. A system comprising:
   a communication module; and
   a control module that is operable to
      determine a traffic condition surrounding a vehicle in real-time;
      detect movement of the vehicle towards a traffic light and an intersection area; determine a time taken for a traffic light cycle;
      determine an average distance travelled by the vehicle during the traffic light cycle; and
      compute a probability of the vehicle crossing the intersection area prior to a red signal of the traffic light cycle, based on the average distance travelled by the vehicle, intersection area information, and a length of the vehicle,
   wherein the probability of the vehicle crossing the intersection area is set to true when computed that the vehicle crosses the intersection area prior to the red signal of the traffic light cycle; and
   wherein the probability of the vehicle crossing the intersection area is set to false when computed that the vehicle obstructs the intersection area.
44. The system of clause 43, wherein the system is configured to be a component of the vehicle.
45. The system of clause 43, wherein the control module is operable to compute that the vehicle is a last vehicle to pass the intersection area prior to the red signal of the traffic light cycle.
46. The system of clause 43, wherein the control module is operable to communicate a first message to a nearby vehicle upon computing that the vehicle is a last vehicle to pass the intersection area prior to the red signal of the traffic light cycle.
47. The system of clause 46, wherein the first message delivers a command to the nearby vehicle before the traffic light provides a signal to the nearby vehicle.
48. The system of clause 47, wherein the command to the nearby vehicle enables continuous mobility to at least one of the vehicle and the nearby vehicle and upgrades the traffic condition.
49. The system of clause 43, wherein the control module is operable to:
   provide a first command to an electric drive unit of the vehicle to pass the intersection area upon the probability of the vehicle crossing the intersection area is set to true.
50. The system of clause 43, wherein the control module is operable to:
   provide a second command to an electric drive unit of the vehicle to stop before the intersection area upon the probability of the vehicle crossing the intersection area is set to true.
51. The system of clause 43, wherein the communication module is enabled for at least one of a vehicle-to-vehicle (V2V) communication, a vehicle-to-infrastructure (V2I) communication, a vehicle-to-everything (V2X) communication, and a Vehicle-to-Network communication.
52. The system of clause 51, wherein the vehicle-to-vehicle(V2V) communication is based on a wireless communication protocol using at least one of a Dedicated Short-Range Communications (DSRC), and a Cellular Vehicle-to-Everything (C-V2X) technology.
53. The system of clause 51, wherein the V2X communication includes at least one of a Vehicle-to-Network (V2N), Vehicle-to-Grid (V2G), Vehicle-to-Device (V2D), and Vehicle-to-Pedestrian (V2P).
54. The system of clause 43, wherein a communication comprises transmitting at least one of data, an instruction, a message, and an information.
55. The system of clause 43, wherein the communication module supports a communication protocol, wherein the communication protocol comprises at least one of a Advanced Message Queuing Protocol (AMQP), Message Queuing Telemetry Transport (MQTT) protocol, Simple (or Streaming) Text Oriented Message Protocol (STOMP), Zigbee protocol, Unified Diagnostic Services (UDS) protocol, Open Diagnostic exchange format (ODX) protocol, Diagnostics Over Internet Protocol (DoIP), On-Board Diagnostics (OBD) protocol, and a predefined protocol standard.
56. The system of clause 43, wherein the system comprises a computing engine.
57. The system of clause 56, wherein the computing engine comprises a machine learning model.
58. The system of clause 57, wherein the machine learning model is configured to learn using labelled data using a supervised learning method, wherein the supervised learning method comprises logic using at least one of a decision tree, a logistic regression, a support vector machine, a k-nearest neighbors, a Naive Bayes, a random forest, a linear regression, a polynomial regression, and a support vector machine for regression.
59. The system of clause 57, wherein the machine learning model is configured to learn from real-time data using an unsupervised learning method, wherein the unsupervised learning method comprises logic using at least one of a k-means clustering, a hierarchical clustering, a hidden Markov model, and an apriori algorithm.
60. The system of clause 57, wherein the machine learning model has a feedback loop, wherein an output from a previous step is fed back to the machine learning model in real-time to improve performance and accuracy of the output of a next step.
61. The system of clause 57, wherein the machine learning model comprises a recurrent neural network model.
62. The system of clause 57, wherein the machine learning model has a feedback loop, wherein the learning is further reinforced for each true positive of an output of the system.
63. A non-transitory computer readable medium storing a sequence of instructions, which when executed by a processor causes:
   determining a traffic condition surrounding a vehicle in real-time;
   detecting movement of the vehicle towards a traffic light and an intersection area;
   determining a time taken for a traffic light cycle;
   determining an average distance travelled by the vehicle during the traffic light cycle; and compute a probability of the vehicle crossing the intersection area prior to a red signal of the traffic light cycle, based on the average distance travelled by the vehicle, intersection area information, and a length of the vehicle,
   wherein the probability of the vehicle crossing the intersection area is set to true when computed that the vehicle crosses the intersection area prior to the red signal of the traffic light cycle; and
   wherein the probability of the vehicle crossing the intersection area is set to false when computed that the vehicle obstructs the intersection area.
64. The non-transitory computer readable medium of clause 63, further causes:
   computing that the vehicle is a last vehicle to pass the intersection area prior to the red signal of the traffic light cycle.
65. The non-transitory computer readable medium of clause 64, further causes:
   communicating a first message to a nearby vehicle upon computing that the vehicle is the last vehicle to pass the intersection area prior to the red signal of the traffic light cycle.
66. The non-transitory computer readable medium of clause 63, further causes:
   providing a first command to an electric drive unit of the vehicle to pass the intersection area upon the probability of the vehicle crossing the intersection area is set to true.
67. The non-transitory computer readable medium of clause 63, further causes:
   providing a second command to an electric drive unit of the vehicle to stop before the intersection area upon the probability of the vehicle crossing the intersection area is set to false.

## Claims

1. A method (200) comprising:
determining, by a control module (1212), a traffic condition surrounding a vehicle in real-time (202);
detecting, by the control module (1212), a movement of the vehicle towards a traffic light and an intersection area (204);
determining, by the control module (1212), a time taken for a traffic light cycle (206);
determining, by the control module (1212), an average distance travelled by the vehicle during the traffic light cycle (208); and
computing, by the control module (1212) through a computing engine (1214), a probability of the vehicle crossing the intersection area prior to a red signal of the traffic light cycle, based on the average distance travelled by the vehicle, intersection area information, and a length of the vehicle (210),
wherein the probability of the vehicle crossing the intersection area is set to true when computed that the vehicle crosses the intersection area prior to the red signal of the traffic light cycle; and
wherein the probability of the vehicle crossing the intersection area is set to false when computed that the vehicle obstructs the intersection area.

2. The method (200) of claim 1, wherein the probability of the vehicle crossing the intersection area computed is set to true further comprises:
computing that the vehicle is a last vehicle to pass the intersection area prior to the red signal of the traffic light cycle and a trailing vehicle behind the vehicle obstructs the intersection area.

3. The method (200) of claim 1, further comprising:
communicating, by the control module (1212), a first message to a nearby vehicle upon computing that the vehicle is the last vehicle to pass the intersection area prior to the red signal of the traffic light cycle.

4. The method (200) of claim 1, further comprising:
providing a first command, by the control module (1212), to an electric drive unit of the vehicle to pass the intersection area upon the probability of the vehicle crossing the intersection area is set to true,
the method preferably further comprising:
maneuvering the vehicle, by the electric drive unit, to cross the intersection area prior to the red signal of the traffic light based on the first command.

5. The method (200) of claim 1, further comprising:
providing a second command, by the control module (1212), to an electric drive unit of the vehicle to stop before the intersection area upon the probability of the vehicle crossing the intersection area is set to false.

6. The method (200) of claim 1, wherein determining the traffic condition surrounding the vehicle in real-time comprises:
monitoring a speed of the vehicle through a sensor;
comparing the speed of the vehicle and a threshold speed; and
determining the traffic condition surrounding the vehicle in real-time when the speed of the vehicle is less than the threshold speed.

7. The method (200) of claim 1, wherein determining the time taken for the traffic light cycle comprises:
performing a video analytics of a video through the computing engine (1214);
scanning the video and detecting an interval between a green signal and the red signal of the traffic light and vice-versa; and
determining the time taken for the traffic light cycle based on the interval,
wherein the video comprises a sequence of frames of a region of interest around the vehicle for a predefined period of time; and
wherein the video comprises the sequence of frames comprising the vehicle and the traffic light.

8. The method (200) of claim 1, wherein determining, by the control module (1212), the average distance travelled by the vehicle during the traffic light cycle comprises:
determining a first length moved by the vehicle during a first traffic light cycle;
determining a second length moved by the vehicle during a second traffic light cycle;
determining a third length moved by the vehicle during a third traffic light cycle; and
calculating the average distance travelled by the vehicle during the traffic light cycle based on the first length, the second length, and the third length.

9. The method (200) of claim 4, further comprising:
capturing a video, ahead of the vehicle, of a region of interest covering the vehicle and the intersection area in real-time;
recognizing an end point of the intersection area from the video in real-time; and
determining that the vehicle passed the intersection area when the end point of the intersection area passed from the video of the region of interest,
the method preferably further comprising:
measuring a distance driven by the vehicle ahead of the end point of the intersection area;
comparing the length of the vehicle and the distance driven by the vehicle; and
determining that the vehicle passed the intersection area when the distance driven by the vehicle is greater than the length of the vehicle.

10. The method (200) of claim 9, further comprising:
measuring a distance driven by the vehicle ahead of the end point of the intersection area;
comparing the length of the vehicle and the distance driven by the vehicle; and
determining that the vehicle is obstructing the intersection area when the distance driven by the vehicle is lesser than the length of the vehicle,
the method preferably further comprising:
upon determining that the vehicle is obstructing the intersection area, measuring a distance between the vehicle and a leading vehicle in a lane of the vehicle and an adjacent lane of the vehicle;
comparing the distance and the length of the vehicle; and
communicating a third command to the electric drive unit to one of move ahead to a predefined distance in the lane, and perform a lane change, when the distance measured is x times greater than the length of the vehicle.

11. The method (200) of claim 2, further comprising:
obtaining a distance driven by the vehicle after crossing the intersection area;
detecting whether there is the trailing vehicle behind the vehicle;
detecting that the trailing vehicle is in the intersection area;
obtaining a model and a length of the trailing vehicle; and
determining an extent of the intersection area that the trailing vehicle is obstructing the intersection area based on the distance driven by the vehicle after crossing the intersection area, the length of the trailing vehicle, the length of the vehicle and a distance between the vehicle and the trailing vehicle,
in particular wherein determining the extent of the intersection area that the trailing vehicle is obstructing the intersection area further comprises:
communicating one of a first signal and a first notification to a leading vehicle to move ahead when the trailing vehicle is obstructing the intersection area;
monitoring a movement of the leading vehicle;
maneuvering the vehicle, by an electric drive unit, in response to the movement of the leading vehicle; and
communicating one of a second signal and a second notification to the trailing vehicle to move ahead to a predefined position to minimize the obstruction of the intersection area.

12. A system (1200) comprising:
a communication module; and
a control module (1212) that is operable to
determine a traffic condition surrounding a vehicle in real-time (1202);
detect movement of the vehicle towards a traffic light and an intersection area (1204);
determine a time taken for a traffic light cycle (1206);
determine an average distance travelled by the vehicle during the traffic light cycle (1208); and
compute, through a computing engine (1214), a probability of the vehicle crossing the intersection area prior to a red signal of the traffic light cycle, based on the average distance travelled by the vehicle, intersection area information, and a length of the vehicle (1210),
wherein the probability of the vehicle crossing the intersection area is set to true when computed that the vehicle crosses the intersection area prior to the red signal of the traffic light cycle; and
wherein the probability of the vehicle crossing the intersection area is set to false when computed that the vehicle obstructs the intersection area.

13. The system (1200) of claim 12, wherein the system (1200) is configured to be a component of the vehicle and /or the computing engine comprises a machine learning model.

14. A non-transitory computer readable medium (1300) storing a sequence of instructions, which when executed by a processor (1301) causes:
determining a traffic condition surrounding a vehicle in real-time (1302);
detecting movement of the vehicle towards a traffic light and an intersection area (1304);
determining a time taken for a traffic light cycle (1306);
determining an average distance travelled by the vehicle during the traffic light cycle (1308); and
computing, through a computing engine, a probability of the vehicle crossing the intersection area prior to a red signal of the traffic light cycle, based on the average distance travelled by the vehicle, intersection area information, and a length of the vehicle (1310),
wherein the probability of the vehicle crossing the intersection area is set to true when computed that the vehicle crosses the intersection area prior to the red signal of the traffic light cycle; and
wherein the probability of the vehicle crossing the intersection area is set to false when computed that the vehicle obstructs the intersection area.

15. The non-transitory computer readable medium (1300) of claim 14, wherein computing, through the computing engine, the probability of the vehicle crossing the intersection area prior to the red signal of the traffic light cycle, based on the average distance travelled by the vehicle, the intersection area information, and the length of the vehicle causes:
obtaining the intersection area information, a pedestrian crossing length, and a bike box length from one of a traffic information database, and a third party service;
recognizing a current signal of the traffic light cycle in real-time; and
assessing the probability of the vehicle crossing the intersection area prior to the red signal of the traffic light cycle based on the average distance travelled by the vehicle during the traffic light cycle, the intersection area information, the current signal of the traffic light cycle, the pedestrian crossing length, the bike box length, and the length of the vehicle.
